# EUROPÄISCHE PATENTSCHRIFT

(11) **EP 3 393 910 B1**
(45) Veröffentlichungstag und Bekanntmachung des Hinweises auf die Patenterteilung: **15.07.2020**
(21) Anmeldenummer: 16819937.0
(22) Anmeldetag: 23.12.2016
(51) Int. Cl.: B64D 11/06, B60N 2/12, B60N 2/30

(54) **TRANSPORTSITZSYSTEM**
TRANSPORT SEAT SYSTEM
SYSTÈME DE SIÈGE DE TRANSPORT

(30) Priorität: 23.12.2015 DE 102015122816
(43) Veröffentlichungstag der Anmeldung: 31.10.2018
(73) Patentinhaber: Recaro Aircraft Seating GmbH & Co. KG, 74523 Schwäbisch Hall (DE)
(72) Erfinder: ITZINGER, Andreas, 74545 Michelfeld (DE)
(74) Vertreter: Daub, Thomas
(86) Internationale Anmeldenummer: PCT/EP2016/082584
(87) Internationale Veröffentlichungsnummer: WO 2017/109188

(56) Entgegenhaltungen:
- EP-A1- 2 727 791
- EP-A2- 2 803 580
- EP-A2- 2 803 581
- DE-A1-102009 004 987
- DE-A1-102010 004 798
- US-A1- 2010 308 619

## Beschreibung

### Stand der Technik

Die Erfindung betrifft ein Transportsitzsystem nach dem Oberbegriff des Patentanspruchs 1.

Es ist bereits ein Transportsitzsystem, insbesondere ein Flugzeugsitzsystem, vorgeschlagen worden, mit zumindest einem ersten Sitz, der zumindest ein Aufständermodul umfasst, das zur Aufständerung des Sitzes in einem Transportmittel dazu vorgesehen ist, auf einer Führungsschiene angebunden zu werden, und mit zumindest einem hinter dem ersten Sitz angeordneten zweiten Sitz, der zumindest ein Aufständermodul umfasst, das zur Aufständerung des Sitzes in dem Transportmittel dazu vorgesehen ist, auf derselben Führungsschiene angebunden zu werden, wobei die beiden Sitze zur Ausbildung einer Gebrauchsstellung und einer Verstaustellung von zumindest einem der Sitze dazu vorgesehen sind, auf der Führungsschiene relativ zueinander verschoben zu werden.

Insbesondere in der EP 2 803 581 A2 ist bereits ein Flugzeugsitzsystem mit zumindest zwei Sitzen vorgeschlagen worden, die auf derselben Führungsschiene angebunden sind und die zur Ausbildung einer Gebrauchsstellung und einer Verstaustellung der Sitze dazu vorgesehen sind, auf der Führungsschiene relativ zueinander verschoben zu werden. Insbesondere das aus der oben genannten Druckschrift bekannte Flugzeugsitzsystem hat den Nachteil, dass die Rückenlehnen der Sitze in einer Verstaustellung eine Höhe aufweisen, die einer Zulassung in Flugzeugen aus Sicherheitsgründen entgegensteht.

In der EP 2 803 580 A2 ist bereits ein Flugzeugsitzsystem vorgeschlagen worden, das mehrere auf Führungsschienen zueinander verschiebbare Sitze aufweist.

Ein Transportsystem mit den Merkmalen des Oberbegriffs des Anspruch 1 ist aus dem Dokument US2010/0308619 A1 bekannt. Weitere Transportsitzsysteme welche überlappende Aufständereinheiten in der Verstaustellung zeigen sind aus den Dokumenten DE 102010004798 A1 und DE 102009004987 A1 bekannt.

Die in den oben genannten Druckschriften offenbarten Merkmale sollen dabei als zu dieser Anmeldung mit offenbart angesehen werden.

Die Aufgabe der Erfindung besteht insbesondere darin, eine gattungsgemäße Vorrichtung mit verbesserten Eigenschaften hinsichtlich einer Variabilität und einer Zulassbarkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Transportsitzsystem, insbesondere einem Flugzeugsitzsystem, mit zumindest einem ersten Sitz, der zumindest ein Aufständermodul umfasst, das zur Aufständerung des Sitzes in einem Transportmittel dazu vorgesehen ist, auf einer Führungsschiene angebunden zu werden, und mit zumindest einem hinter dem ersten Sitz angeordneten zweiten Sitz, der zumindest ein Aufständermodul umfasst, das zur Aufständerung des Sitzes in dem Transportmittel dazu vorgesehen ist, auf derselben Führungsschiene angebunden zu werden, wobei die beiden Sitze zur Ausbildung einer Gebrauchsstellung und einer Verstaustellung von zumindest einem der Sitze dazu vorgesehen sind, auf der Führungsschiene relativ zueinander verschoben zu werden.

Es wird vorgeschlagen, dass zumindest ein Aufständermodul zumindest eines der Sitze eine Sitzfußeinheit aufweist, die relativ zu zumindest einem Teil des Aufständermoduls beweglich gelagert ist. Unter einem "Transportsitzsystem" soll dabei insbesondere ein System aus wenigstens zwei Sitzen verstanden werden, die, in einer Sitzrichtung der Sitze gesehen, hintereinander angeordnet und dazu vorgesehen sind, in einem Transportmittel, wie beispielsweise einem Zug, einem Bus oder einem anderen, dem Fachmann als sinnvoll erscheinenden Transportmittel, angeordnet zu sein. Besonders bevorzugt ist das Transportsitzsystem als ein Flugzeugsitzsystem ausgebildet. Dabei umfasst das Transportsitzsystem vorzugsweise mehr als zwei Sitze. Unter einem "Sitz" soll dabei insbesondere ein Passagiersitz verstanden werden, der dazu vorgesehen ist, einen Sitzplatz für einen Passagier innerhalb eines Transportmittels bereitzustellen. Dabei weist der Sitz vorzugsweise eine Aufständereinheit auf, mittels der der Sitz auf einem Kabinenboden fest aufständerbar ist. Dabei ist der Sitz vorzugsweise als ein Teil einer Sitzreihe ausgebildet, die mehrere, im Wesentlichen gleich ausgebildete Sitze aufweist, die über eine gemeinsame Aufständereinheit auf dem Kabinenboden aufgeständert sind. Ein Sitz weist dabei vorzugsweise weiter einen Sitzboden und zumindest eine Rückenlehne auf. Unter einem "Sitzboden" soll dabei insbesondere eine Einheit verstanden werden, die den Sitzbereich für einen Passagier ausbildet, wobei der Sitzboden dabei vorzugsweise von einem Grundkörper und einem auf dem Grundkörper angebrachten Polster gebildet ist. Unter einem "Sitzbereich" soll dabei insbesondere ein Bereich des Sitzes verstanden werden, der dazu vorgesehen ist, dass ein Passagier, insbesondere während eines Transports, beispielsweise während eines Flugs, darauf sitzt. Unter einer "Rückenlehne" soll dabei insbesondere eine Einheit des Sitzes verstanden werden, die eine Rückenlehnenauflagefläche ausbildet, an der ein auf dem Sitz sitzender Passagier seinen Rücken anlehnen kann. Dabei umfasst die Rückenlehne vorzugsweise zumindest einen Grundkörper und ein Polster, welches die Rückenlehnenauflagefläche ausbildet. Die Rückenlehne ist dabei an einem hinteren Ende des Sitzbodens angeordnet und erstreckt sich von dem Sitzboden nach oben, von einer Aufständereinheit weg. Dabei ist es denkbar, dass der Sitzboden und die Rückenlehne starr miteinander verbunden sind oder dass der Sitzboden und die Rückenlehne zur Ausbildung unterschiedlicher Sitzstellungen zueinander beweglich ausgebildet sind. Unter einem "Flugzeugsitzsystem" soll dabei insbesondere ein System aus wenigstens zwei Flugzeugsitzen verstanden werden, die, bezogen auf ihre Sitzrichtung, hintereinander angeordnet sind, wobei das System in einer Flugzeugkabine angeordnet ist. Dabei ist ein als Flugzeugsitz ausgebildeter Sitz zur Ausbildung eines Sitzplatzes für einen Passagier in einer Flugzeugkabine aufgeständert. Unter einem "Aufständermodul" soll dabei insbesondere ein Teil einer Aufständereinheit verstanden werden, mittels dessen zumindest Teile einer auf den Sitz wirkenden Kraft in eine Aufständerebene abgeleitet werden. Dabei ist ein Aufständermodul mit einer Führungsschiene verbunden und umfasst vorzugsweise wenigstens eine Sitzfußeinheit. Unter einer "Sitzfußeinheit" soll dabei insbesondere eine Einheit verstanden werden, die den Sitz mit einem Kabinenboden des Transportmittels verbindet, auf dem der Sitz, dessen Teil das Aufständermodul ist, aufgeständert ist. Die Sitzfußeinheit ist an einem unteren Ende dabei vorzugsweise mittels eines Befestigungselements mit dem Kabinenboden gekoppelt. Dabei ist die Sitzfußeinheit an dem unteren Ende insbesondere mit einer Führungsschiene gekoppelt. An einem oberen Ende ist die Sitzfußeinheit mit einem Rest des Aufständermoduls verbunden und/oder mit dem Trägerprofil gekoppelt. Unter einer "Aufständereinheit" soll dabei insbesondere eine Einheit verstanden werden, mittels der der Sitz auf der Aufständerebene aufgeständert ist. Dabei umfasst die Aufständereinheit vorzugsweise ein erstes Aufständermodul, das mit einer ersten Führungsschiene gekoppelt ist, und ein zweites Aufständermodul, das mit einer zweiten Führungsschiene gekoppelt ist. Grundsätzlich ist es auch denkbar, dass die Aufständereinheit weitere Aufständermodule aufweist. Dabei ist die Aufständereinheit dazu vorgesehen, alle Sitze, die zu einer zusammenhängenden Sitzreihe zusammengefasst sind, auf der Aufständerebene aufzuständern. Unter einer "Führungsschiene" soll dabei insbesondere eine Schiene verstanden werden, die dazu vorgesehen ist, ein Element oder ein Modul, wie insbesondere ein Teil eines Aufständermoduls, form- und/oder kraftschlüssig anzubinden. Dabei ist eine Führungsschiene vorzugsweise als eine separate, mit einer in die Aufständerebene fest eingebrachten Befestigungsschiene verbundene Schiene ausgebildet. Grundsätzlich ist es auch denkbar, dass die Führungsschiene von einer in die Aufständerebene des Transportmittels eingebrachten Befestigungsschiene ausgebildet ist. Unter "angebunden" soll dabei insbesondere in einer form- und/oder kraftschlüssigen Weise mit einem weiteren Element, wie insbesondere der Führungsschiene, verbunden verstanden werden. Dabei hat das an der Führungsschiene angebundene Element zumindest in einem Betriebszustand zumindest einen Bewegungsfreiheitsgrad und kann dadurch beispielsweise parallel zu der Führungsschiene verschoben werden. Unter einer "Gebrauchsstellung" soll dabei insbesondere eine Stellung des Sitzes verstanden werden, in der er in einer Weise in dem Transportmittel aufgeständert ist, in der er ordnungsgemäß von einer Person genutzt werden kann, wobei der Sitz insbesondere so aufgebaut ist, dass ein Passagier, insbesondere während eines Transports, ordnungsgemäß auf dem Sitz sitzen kann. Unter einer "Verstaustellung" soll dabei insbesondere eine Stellung des Sitzes verstanden werden, in der insbesondere eine Person nicht ordnungsgemäß auf dem Sitz sitzen kann, wobei der Sitz dabei vorzugsweise möglichst kleine Abmaße aufweist oder verschachtelt mit anderen Sitzen oder räumlichen Gegebenheiten angeordnet ist, sodass der Sitz in der Verstaustellung besonders platzsparend angeordnet werden kann. Dabei bleibt eine tragende Sitzstruktur der Aufständereinheit, wie insbesondere die Querträger und Sitzteiler der Sitze, in der Verstaustellung und in der Gebrauchsstellung zumindest im Wesentlichen gleich zueinander ausgerichtet. Unter einem "Teil des Aufständermoduls" soll dabei insbesondere ein starrer Teil des Aufständermoduls verstanden werden, beispielsweise ein mit einem Querträger der Aufständereinheit verbundenes Element. Unter "beweglich gelagert" soll dabei insbesondere über eine Lagereinheit relativ zu einem Element bewegbar befestigt verstanden werden. Eine durch die Lagereinheit in zumindest einem Betriebszustand zugelassene Bewegung kann dabei eine lineare Verschiebung und/oder eine Rotation um zumindest eine Rotationsachse sein. Durch eine erfindungsgemäße Ausgestaltung kann ein Sitz in seiner Verstaustellung besonders platzsparend angeordnet werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann insbesondere ein Transportmittelsystem bereitgestellt werden, das vorteilhaft flexibel ist, in dem nicht benötigte Sitze einfach verstaubar sind und dadurch Sitze mit größerem Fußbereich bereitgestellt werden können.

Es wird weiter vorgeschlagen, dass die Sitze jeweils eine Rückenlehne umfassen, die in der Gebrauchsstellung und in der Verstaustellung eine aufrechte Stellung aufweist. Unter einer "aufrechten Stellung der Rückenlehne" soll dabei insbesondere eine Stellung der Rückenlehne verstanden werden, in der die Rückenlehne im Wesentlichen senkrecht zu der Aufständerebene steht und in der insbesondere an der Rückenlehne befestigte Nutzelemente, wie insbesondere ein Tisch oder ein Halteelement, das insbesondere an einer Rückseite der Rückenlehne angeordnet ist, von einem hinter dem Sitz sitzenden Passagier benutzbar ist. Dabei weisen die Rückenlehnen der Sitze in der Gebrauchsstellung und in der Verstaustellung eine gleiche Höhe auf. Dabei soll darunter, dass die Rückenlehne in der Verstaustellung und in der Gebrauchsstellung eine gleiche Höhe aufweist", insbesondere verstanden werden, dass ein Abstand zwischen einer obersten Kante der Rückenlehne und der Aufständereinheit in der Verstaustellung und der Gebrauchsstellung gleich groß ist. Dadurch kann insbesondere vorteilhaft erreicht werden, dass der in der Verstaustellung befindliche Sitz für einen hinter dem Sitz sitzenden Passagier nutzbare Nutzelemente aufweist.

Zudem wird erfindungsgemäß vorgeschlagen, dass die Rückenlehnen der Sitze in der Gebrauchsstellung und in der Verstaustellung eine gleiche Stellung aufweisen. Unter einer "gleichen Stellung" soll dabei insbesondere eine im Wesentlichen identische Stellung verstanden werden, also insbesondere eine gleiche Höhe, eine gleiche Neigung und/oder einer gleichen Orientierung zu einer definierten Referenzebene und/oder einem Referenzpunkt. Dabei weist eine Rückenlehne in der Verstaustellung und in der Gebrauchsstellung eine im Wesentlichen gleiche Höhe und eine gleiche Neigung, vorzugsweise eine exakt gleiche Höhe und Neigung zu einem Kabinenboden auf, auf dem der Sitz aufgeständert ist. Insbesondere ist die Rückenlehne in der Verstaustellung und in der Gebrauchsstellung in einer TTL-Position angeordnet. Unter einer "TTL-Position" soll dabei insbesondere eine aufrechte Position des Flugzeugsitzes verstanden werden, die aus Sicherheitsgründen, insbesondere in einer Startphase, in einer Landephase und während Turbulenzen, eingenommen werden muss. Dabei stehen in der TTL-Position eine Rückenlehne des Flugzeugsitzes und der Sitzboden im Wesentlichen senkrecht aufeinander, vorzugsweise in einem Winkel von zwischen 90 Grad und 110 Grad. Die TTL-Position bildet dabei eine erste Endposition aus, in die die Rückenlehne des Flugzeugsitzes maximal verstellbar ist. Vorzugsweise ist die Rückenlehne eines Sitzes in der Verstaustellung und in der Gebrauchsstellung identisch ausgerichtet. Insbesondere ist die Rückenlehne in der Verstaustellung in einer Position angeordnet, die einer zugelassenen Sitzposition des Sitzes entspricht. Die Rückenlehne ist dabei in der Verstaustellung insbesondere nicht höher angeordnet als in einer Gebrauchsstellung. Dabei sind an der Rückenlehne angebrachte Bauteile, wie insbesondere ein Tisch, ein Cupholder, ein Tablet-Halter und/oder eine Literaturtasche in der Verstaustellung in einem gleichen Umfang und in einer gleichen Weise benutzbar wie in einer Gebrauchsstellung des Sitzes. Die Rückenlehne wird bei einer Verstellung von der Gebrauchsstellung in die Verstaustellung insbesondere nicht zu dem Kabinenboden verschwenkt und/oder zu diesem angehoben. Dadurch kann die Rückenlehne in der Verstaustellung des Sitzes besonders vorteilhaft angeordnet sein.

Weiter wird erfindungsgemäß vorgeschlagen, dass zumindest einer der Sitze in der Verstaustellung zumindest mit seinem Aufständermodul zumindest teilweise überlappend zu dem Aufständermodul des anderen Sitzes angeordnet ist. Unter "zumindest teilweise überlappend" soll dabei insbesondere verstanden werden, dass sich Elemente, wie insbesondere die Aufständermodule der Sitze, entlang einer Verschieberichtung einer Führungsschiene, über die der Sitz aufgeständert ist, überschneiden. Dabei überschneiden sich insbesondere Hüllkurven der beiden Sitze in der Verstaustellung. Dabei überschneiden sich die Hüllkurven der beiden Sitze in der Verstaustellung um zumindest 20 %, vorzugsweise um zumindest 25 % und besonders vorteilhaft um zumindest 33 %. Unter einer "Hüllkurve" soll dabei insbesondere eine imaginäre Kurve, die um die größten Abmessungen eines Sitzes gezogen ist, verstanden werden, wobei an einem hintersten Punkt des Sitzes die hintere Seite der Hüllkurve von der Aufständerebene senkrecht zur Aufständerebene nach oben gezogen ist und bis zum obersten Ende der Rückenlehne reicht und wobei an einem vordersten Ende die vordere Seite der Hüllkurve von der Aufständerebene senkrecht zur Aufständerebene nach oben gezogen ist und bis zum obersten Ende der Rückenlehne reicht. Dadurch können zwei hintereinander angeordnete Sitzreihe in zumindest einer Verstaustellung besonders vorteilhaft platzsparend zueinander angeordnet werden.

Ferner wird vorgeschlagen, dass die bewegliche Sitzfußeinheit als eine vordere Sitzfußeinheit des zweiten Sitzes ausgebildet ist. Unter "einer vorderen Sitzfußeinheit" soll dabei insbesondere eine Sitzfußeinheit eines Aufständermoduls verstanden werden, die, in einer Sitzrichtung des Sitzes gesehen, an einem vorderen Ende des Sitzes angeordnet ist. Dadurch kann das Aufständermodul des zweiten Sitzes besonders vorteilhaft ausgebildet werden.

Es wird weiterhin vorgeschlagen, dass die eine Sitzfußeinheit des Aufständermoduls des einen Sitzes zur Verstellung zwischen der Gebrauchsstellung und der Verstaustellung relativ zu einer zweiten Sitzfußeinheit beweglich ist. Dabei ist es denkbar, dass die beweglich gelagerte Sitzfußeinheit als eine vordere oder als eine hintere Sitzfußeinheit ausgebildet ist. Unter einer "hinteren Sitzfußeinheit" soll dabei insbesondere eine Sitzfußeinheit eines Aufständermoduls verstanden werden, die, in einer Sitzrichtung des Sitzes gesehen, an einem hinteren Ende des Sitzes angeordnet ist. Dadurch kann das Aufständermodul des zweiten Sitzes besonders vorteilhaft ausgebildet werden.

Des Weiteren wird vorgeschlagen, dass das Aufständermodul ein Linearlager aufweist, über das die bewegliche Sitzfußeinheit zu der anderen Sitzfußeinheit verschiebbar ist. Unter einem "Linearlager" soll dabei insbesondere eine Lagervorrichtung verstanden werden, über die zwei über die Lagervorrichtung gekoppelte Elemente entlang einer Verschiebebahn zueinander beweglich sind. Dabei ist die Verschiebebahn der Linearführung vorzugsweise von einer Geraden gebildet. Grundsätzlich ist es aber auch denkbar, dass eine Verschiebebahn der Linearführung einen gekrümmten Verlauf aufweist. Dadurch kann eine vordere Sitzfußeinheit besonders vorteilhaft und weit zu der hinteren Sitzfußeinheit verschoben werden, wodurch eine besonders vorteilhafte Überlappung zweier Sitze erreicht werden kann.

Weiterhin wird vorgeschlagen, dass das Aufständermodul ein Schwenklager aufweist, über das die vordere Sitzfußeinheit verschwenkbar ist. Unter einem "Schwenklager" soll dabei insbesondere eine Lagervorrichtung verstanden werden, über die zwei über die Lagervorrichtung gekoppelte Elemente um eine Rotationsachse zueinander verdrehbar sind. Grundsätzlich wäre es auch denkbar, dass das Aufständermodul mehrere Lager aufweist. Grundsätzlich wäre es auch denkbar, dass das Aufständermodul dabei eine Kombination aus einem oder mehreren Schwenklagern und/oder aus einem oder mehreren Linearlagern aufweist. Dabei ist ein Schwenklager vorzugsweise auf einen definierten Schwenkwinkel begrenzt, um den die beiden Elemente zueinander verdrehbar sind. Dadurch kann vorteilhaft die Sitzfußeinheit besonders einfach beweglich zu dem restlichen Aufständermodul gelagert werden.

Außerdem wird vorgeschlagen, dass das Aufständermodul des zweiten Sitzes einen Grundkörper ausbildet, der die hintere Sitzfußeinheit und einen Tragbereich zwischen zwei Querträgern des Sitzes ausbildet. Unter einem "Grundkörper" soll dabei insbesondere ein einstückig ausgebildeter Körper verstanden werden, der einen Teil, vorzugsweise einen Großteil eines Moduls, wie insbesondere des Aufständermoduls, ausbildet. Unter einem "Tragbereich" soll dabei insbesondere ein Bereich des Grundkörpers verstanden werden, der eine Anbindung an Querträger der Aufständereinheit und/oder eine Anbindung zu einem Sitzboden des Sitzes aufweist. Unter einem "Querträger" soll dabei insbesondere ein Teil der Aufständereinheit verstanden werden, der sich quer zu der Sitzrichtung der Sitze erstreckt, welche über die Aufständereinheit aufgeständert sind. Ein Sitz weist dabei vorzugsweise einen vorderen Querträger und einen hinteren Querträger auf. Dadurch kann das Aufständermodul besonders vorteilhaft ausgebildet werden.

Es wird weiter vorgeschlagen, dass der erste Sitz zumindest ein Auslöseelement aufweist, das zur Betätigung vorgesehen ist, um den ersten Sitz zwischen einer Arretierstellung und einer Verschiebestellung zu verstellen. Unter einem "Auslöseelement" soll dabei insbesondere ein Element verstanden werden, mittels dessen ein Benutzer eine Aktion, wie beispielsweise ein Entsperren oder ein Sperren eines Verriegelungselements, auslösen kann. Dabei ist es denkbar, dass das Auslöseelement als ein starres Betätigungselement, wie beispielsweise ein Hebelelement, ausgebildet ist, oder als ein Zugelement, wie beispielsweise ein Bowdenzug. Dabei ist es grundsätzlich auch denkbar, dass das Auslöseelement als ein Teil des Flugzeugsitzes, wie beispielsweise als eine Armlehne oder eine Rückenlehne, ausgebildet ist. Dabei kann eine Hebelwirkung zur Verstellung einer Betätigung über die Armlehne oder die Rückenlehne ausgelöst werden. Grundsätzlich ist es ebenso denkbar, dass das Auslöseelement über eine elektronische oder elektromagnetische Auslösung betätigbar ist. Unter einer "Arretierstellung" soll dabei insbesondere eine Stellung verstanden werden, in der ein Sitz oder zumindest eine Sitzfußeinheit des Sitzes starr mit der Führungsschiene gekoppelt ist und nicht auf der Führungsschiene verschoben werden kann. In der Arretierstellung weist der Sitz oder zumindest eine Sitzfußeinheit des Sitzes keinen Freiheitgrad auf, in dem eine Bewegung zu der Führungsschiene möglich ist. Unter einer "Verschiebestellung" soll dabei insbesondere eine Stellung des Sitzes verstanden werden, in der ein Sitz oder zumindest eine Sitzfußeinheit des Sitzes entlang einer Verschiebebahn der Führungsschiene verschiebbar auf der Führungsschiene gelagert ist und zwischen verschiedenen Stellungen, wie insbesondere einer Gebrauchsstellung und einer Verstaustellung, oder zwischen unterschiedlichen Positionen auf der Führungsschiene verschoben werden kann. Dadurch kann vorteilhaft der zumindest eine Sitz besonders einfach für eine Verstellung arretiert oder gelöst werden.

Zudem wird vorgeschlagen, dass der erste Sitz zumindest zwei Aufständermodule umfasst, die von dem Auslöseelement gemeinsam ausgelöst werden. Darunter, dass das "Auslöseelement die Aufständermodule gemeinsam auslöst", soll dabei insbesondere verstanden werden, dass sich das Auslöseelement zumindest über eine Distanz zwischen den beiden Aufständermodulen erstreckt und zumindest mit den beiden Aufständermodulen gekoppelt ist, um diese durch eine Betätigung durch eine Person zwischen einer Arretierstellung und einer Verschiebestellung zu verstellen. Dabei sind die beiden Aufständermodule, insbesondere Befestigungselemente beider Aufständermodule, durch das eine Auslöseelement betätigbar. Dadurch kann eine Verstellung des Sitzes zwischen seiner Arretierstellung und seiner Verschiebestellung besonders einfach erfolgen.

Weiter wird vorgeschlagen, dass das Auslöseelement als eine Gepäckstange ausgebildet ist. Unter einer "Gepäckstange" soll dabei insbesondere eine Stange verstanden werden, die sich zwischen der Aufständerebene und dem Sitzboden eines Sitzes erstreckt und dazu vorgesehen ist, zu verhindern, dass Gegenstände, wie insbesondere Gepäckstücke, unterhalb des Sitzbodens hindurchrutschen können. Dabei erstreckt sich die Gepäckstange vorzugsweise quer zu einer Sitzrichtung des Sitzes über eine gesamte Breite eines Sitzes oder einer Sitzreihe sowie in einem seitlichen Endbereich des Sitzes in Sitzrichtung. Dadurch kann das Auslöseelement besonders vorteilhaft ausgebildet werden.

Ferner wird vorgeschlagen, dass der erste Sitz zumindest ein Befestigungselement aufweist, das das zumindest eine Aufständermodul mit der Führungsschiene koppelt, wobei das Befestigungselement zumindest ein Verriegelungselement aufweist, das mittels des Auslöseelements zwischen einer Verriegelstellung und einer Entriegelstellung verstellbar ist. Unter einem "Befestigungselement" soll dabei insbesondere ein Element verstanden werden, das dazu vorgesehen ist, zwei weitere Elemente, wie insbesondere eine Führungsschiene und ein Aufständermodul, form- und/oder kraftschlüssig miteinander zu verbinden. Dabei weist das Befestigungselement vorzugsweise zwei Betriebszustände auf, eine Verriegelstellung und eine Entriegelstellung. Unter einer "Verriegelstellung" soll dabei insbesondere ein Betriebszustand des Befestigungselements verstanden werden, in dem das Befestigungselement starr auf der Führungsschiene angeordnet ist und insbesondere keine Bewegung entlang einer Verschieberichtung der Führungsschiene möglich ist. In der Verriegelstellung können Kräfte auch in der Verschieberichtung von dem Befestigungselement in die Führungsschiene eingeleitet werden. Unter einer "Entriegelstellung" soll dabei insbesondere ein Betriebszustand des Befestigungselements verstanden werden, in dem das Befestigungselement mit der Führungsschiene so verbunden ist, dass das Befestigungselement in der Verschieberichtung der Führungsschiene auf der Führungsschiene verschoben werden kann. In der Entriegelstellung können keine Kräfte entlang der Verschieberichtung der Führungsschiene von dem Befestigungselement in die Führungsschiene eingeleitet werden. Dadurch kann der Sitz besonders einfach in dem Transportmittel aufgeständert werden.

Es wird weiterhin vorgeschlagen, dass der erste Sitz zumindest ein zweites Befestigungselement zur Anbindung an eine zweite Führungsschiene aufweist, wobei das zweite Befestigungselement gemeinsam mit dem ersten Befestigungselement von dem Auslöseelement betätigbar ist. Unter "gemeinsam betätigbar" soll dabei insbesondere verstanden werden, dass beide Befestigungselemente über eine gemeinsame Entriegel- oder Verriegelbewegung des Auslöseelements zwischen der Verriegelstellung und der Entriegelstellung umgeschaltet werden können. Dadurch kann der Sitz besonders einfach zwischen seiner Arretierstellung und seiner Verschiebestellung verschoben werden.

Des Weiteren wird vorgeschlagen, dass das gesamte Auslöseelement beweglich in dem zumindest einen Aufständermodul gelagert ist. Unter "beweglich gelagert" soll in diesem Zusammenhang insbesondere verstanden werden, dass das Auslöseelement in zumindest einem Betriebszustand relativ zu einem Aufständermodul bewegt werden kann, wobei es denkbar ist, dass das Auslöseelement dabei zu dem Aufständermodul verdreht oder in einer Verschieberichtung verschoben wird. Dadurch kann das Auslöseelement besonders vorteilhaft an dem Sitz angebracht werden.

Weiterhin wird vorgeschlagen, dass das Transportsitzsystem wenigstens einen Verriegelungsmechanismus aufweist, der die bewegliche Sitzfußeinheit in zumindest einer Stellung verriegelt. Dadurch kann die bewegliche Sitzfußeinheit in verschiedenen Stellungen vorteilhaft arretiert werden.

Das erfindungsgemäße Transportsitzsystem soll hierbei nicht auf die oben beschriebene Anwendung und Ausführungsform beschränkt sein. Insbesondere kann das erfindungsgemäße Transportsitzsystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Transportsitzsystems in einem ersten Ausführungsbeispiel mit zwei Sitzen in einer Gebrauchsstellung,
- Fig. 2: eine schematische Darstellung des Transportsitzsystems mit einem Sitz in seiner Verstaustellung,
- Fig. 3: eine Detailansicht eines Aufständermoduls eines hinteren Sitzes mit einer vorderen Sitzfußeinheit in einer Verstaustellung,
- Fig. 4: eine schematische Detailansicht einer Sitzreihe mit beweglichen Sitzfußeinheiten,
- Fig. 5: eine schematische Darstellung einer Sitzreihe mit der Sitzen in einer Gebrauchsstellung,
- Fig. 6: eine Detailansicht eines Verriegelungsmechanismus für ein Auslöseelement zur Betätigung eines Befestigungselements,
- Fig. 7: einer Detailansicht des Auslöseelements und des Befestigungselements, das es betätigt,
- Fig. 8: eine schematische Darstellung eines erfindungsgemäßen Transportsitzsystems in einem zweiten Ausführungsbeispiel mit zwei Sitzen in einer Gebrauchsstellung,
- Fig. 9: eine schematische Darstellung des Transportsitzsystems in dem zweiten Ausführungsbeispiel mit einem Sitz in seiner Verstaustellung,
- Fig. 10: eine schematische Darstellung eines erfindungsgemäßen Transportsitzsystems in einem dritten Ausführungsbeispiel mit drei Sitzen in einer Gebrauchsstellung und
- Fig. 11: eine schematische Darstellung des Transportsitzsystems in dem dritten Ausführungsbeispiel mit einem Sitz in seiner Verstaustellung.

### Beschreibung der Ausführungsbeispiele

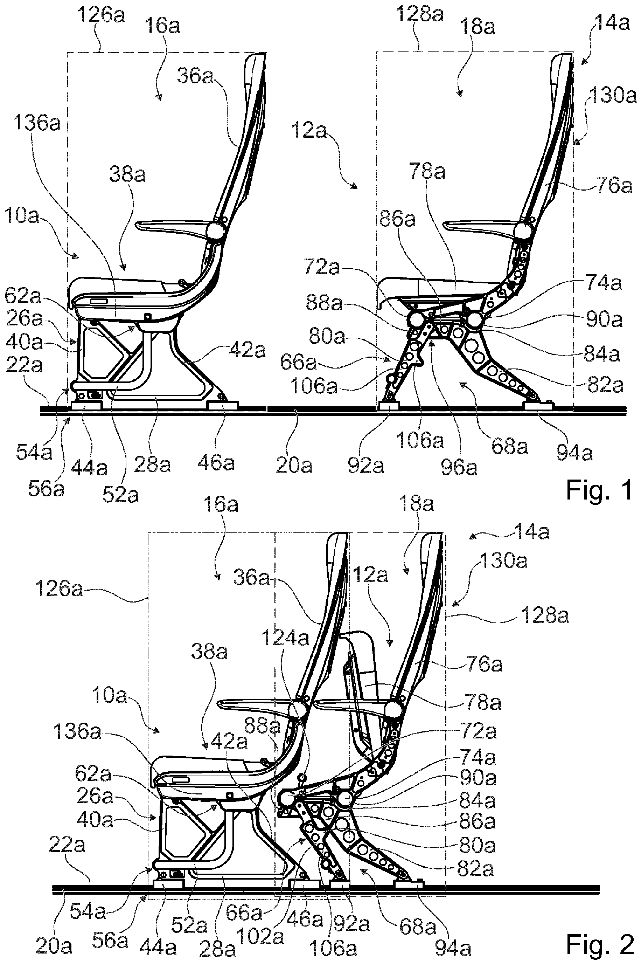

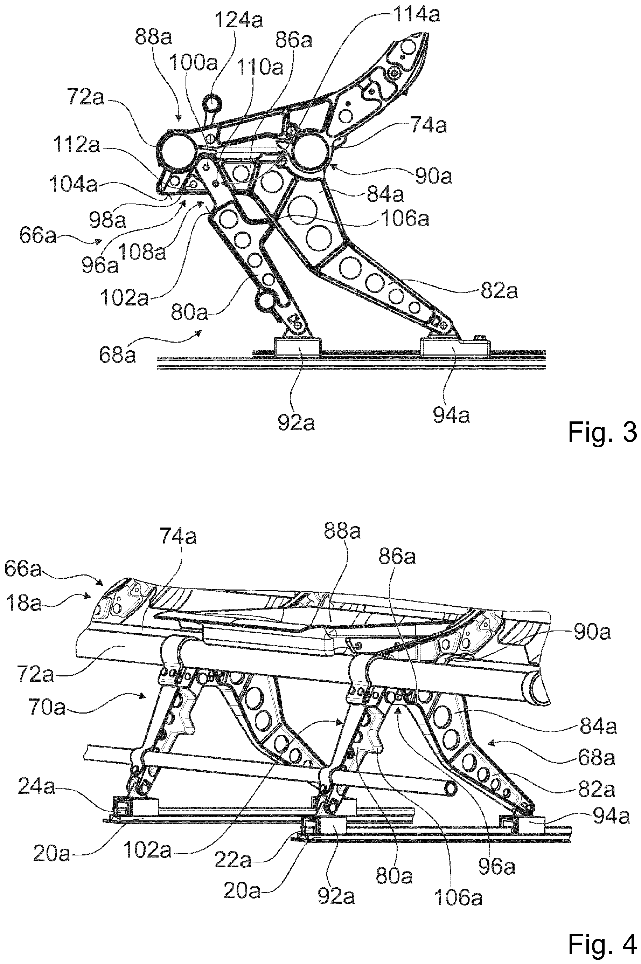

Die Figuren 1 bis 7 zeigen ein erstes Ausführungsbeispiel eines erfindungsgemäßen Transportsitzsystems. Das Transportsitzsystem ist als ein Sitzsystem für ein Transportmittel ausgebildet. Das Transportsitzsystem ist als ein Flugzeugsitzsystem ausgebildet. Grundsätzlich ist es auch denkbar, dass das Transportsitzsystem als ein Sitzsystem für ein anderes Transportmittel ausgebildet ist, wie beispielsweise als ein Zugsitzsystem oder ein Bussitzsystem. Das Transportsitzsystem umfasst einen ersten Sitz 10a. Weiter umfasst das Transportsitzsystem einen zweiten Sitz 12a. Der erste Sitz 10a ist als ein vorderer Sitz 10a ausgebildet. Der zweite Sitz 12a ist als ein hinterer Sitz 12a ausgebildet. Die beiden Sitze 10a, 12a sind als ein Sitzpaar 14a ausgebildet. Dabei weist das Transportsitzsystem weitere, nicht näher dargestellte Sitzpaare auf, die äquivalent zu dem Sitzpaar 14a ausgebildet sind. Das Sitzpaar 14a ist in einer Flugzeugkabine aufgeständert. Die Sitze 10a, 12a sind dabei jeweils als ein Teil einer Sitzreihe 16a, 18a ausgebildet. Eine Sitzreihe 16a, 18a umfasst dabei jeweils drei nebeneinander angeordnete Sitze 10a, 12a. Die Sitze 10a, 12a einer Sitzreihe 16a, 18a sind dabei im Wesentlichen äquivalent ausgebildet. Im Folgenden soll dabei, wenn von einem Sitz 10a, 12a die Rede ist, vorzugsweise die gesamte Sitzreihe 16a, 18a verstanden werden, deren Teil der entsprechende Sitz 10a, 12a ist. Grundsätzlich ist es auch denkbar, dass eine Sitzreihe 16a, 18a eine andere Anzahl an Sitzen 10a, 12a aufweist. Die Sitze 10a, 12a sind in einer Flugzeugkabine eines Flugzeuges aufgeständert. Grundsätzlich wäre es auch denkbar, dass die Sitze 10a, 12a in einem anderen Transportmittel, beispielsweise in einem Fahrgastraum eines Busses, aufgeständert sind. Die Flugzeugkabine weist zwei parallel in einem Kabinenboden der Flugzeugkabine angebrachte Befestigungsschienen 20a auf. Die Befestigungsschienen 20a sind dabei in den Kabinenboden eingelassen. In der Flugzeugkabine sind dabei vorzugsweise weitere parallel verlaufende Befestigungsschienen angeordnet, über die weitere, nicht näher dargestellte Sitze in der Flugzeugkabine aufgeständert werden können. Das Transportsitzsystem umfasst eine erste Führungsschiene 22a und eine zweite Führungsschiene 24a. Die Führungsschienen 22a, 24a sind jeweils fest mit einer der Befestigungsschienen 20a der Flugzeugkabine verbunden. Dabei sind die Führungsschienen 22a, 24a starr auf der entsprechenden Befestigungsschiene montiert. Die Sitze 10a, 12a sind über die Führungsschienen 22a, 24a mit dem Kabinenboden gekoppelt. Grundsätzlich wäre es auch denkbar, dass die Sitze 10a, 12a direkt über die Befestigungsschienen 20a der Flugzeugkabine in der Flugzeugkabine aufgeständert sind. Dabei würden die Befestigungsschienen 20a die entsprechenden Funktionen der Führungsschienen 22a, 24a übernehmen.

Der erste Sitz 10a ist als ein vorderer Sitz ausgebildet. Der erste Sitz 10a ist, in einer Sitzrichtung des Sitzes 10a gesehen, vor dem zweiten Sitz 12a angeordnet. Der zweite Sitz 12a ist als der hintere Sitz des Sitzpaares 14a ausgebildet. In Sitzrichtung des zweiten Sitzes 12a ist der zweite Sitz 12a hinter dem ersten Sitz 10a angeordnet. Der erste Sitz 10a ist Teil der ersten Sitzreihe 16a. Der zweite Sitz 12a ist als Teil der zweiten Sitzreihe 18a ausgebildet. Die erste Sitzreihe 16a ist als eine vordere Sitzreihe ausgebildet. Die erste Sitzreihe 16a ist in Sitzrichtung der Sitze 10a, 12a vor der zweiten, hinteren Sitzreihe 18a angeordnet. Die Sitzrichtungen der Sitze 10a, 12a sind dabei vorzugsweise parallel zu einer Haupterstreckungsrichtung des Transportmittels, wie insbesondere der Flugzeugkabine, ausgerichtet. Die Sitzrichtungen der Sitze 10a, 12a sind dabei vorzugsweise in Transportrichtung, insbesondere in Flugrichtung, ausgerichtet. Grundsätzlich wäre es aber auch denkbar, dass die Sitzrichtungen der beiden Sitze entgegengesetzt verlaufen. Grundsätzlich wäre es ebenfalls denkbar, dass die Sitze 10a, 12a in einem Winkel zu der Flugrichtung ausgerichtet sind. Dabei ist es beispielsweise denkbar, dass die Sitze 10a, 12a in einem 45-Grad-Winkel zu der Flugrichtung ausgerichtet sind.

Der erste Sitz 10a umfasst eine Aufständereinheit 26a, über die der Sitz 10a aufgeständert ist. Über die Aufständereinheit 26a sind alle Sitze 10a der ersten Sitzreihe 16a auf dem Kabinenboden aufgeständert. Die Aufständereinheit 26a umfasst ein erstes Aufständermodul 28a und ein zweites Aufständermodul 30a. Das erste Aufständermodul 28a ist mit der ersten Führungsschiene 22a verbunden. Das zweite Aufständermodul 30a ist mit der zweiten Führungsschiene 24a verbunden. Das erste Aufständermodul 28a und das zweite Aufständermodul 30a sind im Wesentlichen identisch ausgebildet. Dabei ist es denkbar, dass die beiden Aufständermodule 28a, 30a unterschiedlich ausgebildet sind. Da die beiden Aufständermodule 28a, 30a gleich ausgebildet sind, wird in der folgenden Beschreibung lediglich das erste Aufständermodul 28a näher beschrieben. Die Aufständereinheit 26a weist zwei Querträger 32a, 34a auf. Die Querträger 32a, 34a verlaufen parallel zueinander. Die Querträger 32a, 34a sind als Tragrohre ausgebildet. Der Querträger 32a ist als ein vorderes Tragrohr ausgebildet. Der Querträger 34a ist als hinteres Tragrohr ausgebildet. Der Querträger 32a ist dabei in Sitzrichtung des Sitzes 10a vor dem Querträger 34a angeordnet. Die Querträger 32a, 34a erstrecken sich über die gesamte Breite aller Sitze 10a der Sitzreihe 16a. Über die Querträger 32a, 34a werden Kräfte aus den Sitzen 10a der Sitzreihe 16a in die Aufständermodule 28a, 30a geleitet. Der Sitz 10a umfasst weiter eine Rückenlehne 36a sowie einen Sitzboden 38a. Der Sitzboden 38a und die Rückenlehne 36a sind mit der Aufständereinheit 26a gekoppelt. Dabei sind die Rückenlehne 36a und der Sitzboden 38a beweglich zueinander gelagert, sodass zumindest zwei unterschiedliche Sitzpositionen dargestellt werden können. Grundsätzlich ist es aber auch denkbar, dass die Rückenlehne 36a und der Sitzboden 38a starr und unbeweglich zueinander ausgebildet sind. Die Rückenlehne 36a und der Sitzboden 38a sind dabei über nicht näher beschriebene Befestigungsmittel mit der Aufständereinheit 26a verbunden. Dabei sind die Rückenlehne 36a und der Sitzboden 38a auf eine aus dem Stand der Technik bekannte Weise mit der Aufständereinheit 26a verbunden.

Das Aufständermodul 28a des Sitzes 10a bildet eine vordere Sitzfußeinheit 40a und eine hintere Sitzfußeinheit 42a aus. Die vordere Sitzfußeinheit 40a bildet einen vorderen Sitzfuß aus, der den Sitz 10a in einem vorderen Bereich zu der Führungsschiene 22a abstützt. Die hintere Sitzfußeinheit 42a bildet einen hinteren Sitzfuß aus, der den Sitz 10a in einem hinteren Bereich zu der Führungsschiene 22a abstützt. Die vordere Sitzfußeinheit 40a weist einen ersten Anbindungsbereich auf, mit dem die vordere Sitzfußeinheit 40a mit dem vorderen Querträger 32a verbunden ist. Dabei ist die vordere Sitzfußeinheit 40a über den Anbindungsbereich starr mit dem Querträger 32a gekoppelt. Die hintere Sitzfußeinheit 42a weist ebenfalls einen ersten Anbindungsbereich auf, mit dem die hintere Sitzfußeinheit 42a mit dem hinteren Querträger 34a verbunden ist. Dabei ist die hintere Sitzfußeinheit 42a über den Anbindungsbereich starr mit dem Querträger 34a gekoppelt. Die vordere Sitzfußeinheit 40a und die hintere Sitzfußeinheit 42a des Aufständermoduls 28a sind dabei einstückig miteinander ausgebildet. Grundsätzlich wäre es dabei auch denkbar, dass die vordere Sitzfußeinheit 40a und die hintere Sitzfußeinheit 42a mehrteilig ausgebildet sind. Das Aufständermodul 28a ist von einer ebenen Platte mit mehreren Ausnehmungen gebildet. Das Aufständermodul 28a ist als eine Trägerstruktur ausgebildet, die entsprechend den Lastpfaden, über die Kräfte in den Kabinenboden abgeleitet werden, Träger- und Rippenelemente aufweisen kann.

Zur Anbindung an die Führungsschiene 22a weist der Sitz 10a ein erstes Befestigungselement 44a und ein zweites Befestigungselement 46a auf. Das erste Befestigungselement 44a ist als ein vorderes Befestigungselement ausgebildet und dazu vorgesehen, die vordere Sitzfußeinheit 40a mit der Führungsschiene 22a zu koppeln. Dazu ist das erste Befestigungselement 44a starr mit der vorderen Sitzfußeinheit 40a verbunden. Das zweite Befestigungselement 46a ist als ein hinteres Befestigungselement ausgebildet und dazu vorgesehen, die hintere Sitzfußeinheit 42a mit der Führungsschiene 22a zu koppeln. Dazu ist das zweite Befestigungselement 46a starr mit der hinteren Sitzfußeinheit 42a verbunden. Das zweite, hintere Befestigungselement 46a ist dabei als ein Loslager ausgebildet. Das zweite Befestigungselement 46a ist formschlüssig mit der Führungsschiene 22a verbunden. Die Führungsschiene 22a bildet auf jeder axialen Seite einen Hinterschnitt aus, in die das Befestigungselement 46a formschlüssig eingreift. Das Befestigungselement 46a ist dabei entlang der Verschieberichtung der Führungsschiene 22a verschiebbar gelagert. Das zweite Befestigungselement 46a weist kein Fixierelement auf, mit dem das Befestigungselement 46a in Verschieberichtung auf der Führungsschiene 22a fixiert werden könnte. Grundsätzlich ist es ebenso denkbar, dass das zweite Befestigungselement 46a ebenfalls ein Fixierelement aufweist und in einer Gebrauchsstellung mi der Führungsschiene 22a fest gekoppelt ist. Dadurch könnte der Sitz 10a über beide Befestigungselemente 44a, 46a mit der Führungsschiene 22a fest gekoppelt sein. Kräfte in Verschieberichtung der Führungsschiene 22a können von dem zweiten Befestigungselement 46a nicht auf die Führungsschiene 22a übertragen werden. Das erste Befestigungselement 44a weist ein Verriegelungselement 48a auf. Über das Verriegelungselement 48a ist das Befestigungselement 46a fest auf der Führungsschiene 22a fixierbar. Über das Verriegelungselement 48a ist das Befestigungselement 44a in verschiedenen Positionen auf der Führungsschiene 22a fixierbar. Das Verriegelungselement 48a ist als ein Bolzen ausgebildet. Grundsätzlich ist es auch denkbar, dass das Verriegelungselement 48a auf eine andere, dem Fachmann als sinnvoll erscheinende Weise ausgebildet ist, wie beispielsweise als ein Haken oder ein anderes Form- und/oder Kraftschlusselement. Das Verriegelungselement 48a ist beweglich in dem Befestigungselement 44a gelagert. Dabei weist das Verriegelungselement 48a zumindest zwei Stellungen auf. In einer Verriegelstellung fixiert das Verriegelungselement 48a das Befestigungselement 44a auf der Führungsschiene 22a. In der Verriegelstellung verbindet das Verriegelungselement 48a das Befestigungselement 44a form- und/oder kraftschlüssig mit der Führungsschiene 22a. In der Verriegelstellung des Verriegelungselements 48a ist das Befestigungselement 44a verriegelt und lässt sich nicht auf der Führungsschiene 22a verschieben. In der Verriegelstellung kann über das Befestigungselement 44a eine Kraft entlang der Verschieberichtung der Führungsschiene 22a in die Führungsschiene 22a eingeleitet werden. In einer Entriegelstellung ist das Verriegelungselement 48a nicht form- und/oder kraftschlüssig mit der Führungsschiene 22a verbunden. In der Entriegelstellung des Verriegelungselement 48a lässt sich das Befestigungselement 44a entlang der Verschieberichtung der Führungsschiene 22a verschieben. In der Entriegelstellung des Verriegelungselement 48a lässt sich das gesamte Aufständermodul 28a auf der Führungsschiene 22a verschieben. Zur Befestigung des zweiten Aufständermoduls 30a auf der zweiten Führungsschiene 24a weist der Sitz 10a ein weiteres vorderes Befestigungselement 50a und ein nicht näher dargestelltes zweites hinteres Befestigungselement auf, die äquivalent zu den oben beschriebenen Befestigungselementen 44a, 46a ausgebildet sind.

Zur Verstellung des Sitzes 10a zwischen einer Arretierstellung und einer Verschiebestellung weist der Sitz 10a ein Auslöseelement 52a auf. Das Auslöseelement 52a ist zu einer Betätigung durch eine Person, wie insbesondere durch ein Personal, vorgesehen. Dabei ist das Auslöseelement 52a insbesondere zu einer manuellen Betätigung vorgesehen. Insbesondere ist das Auslöseelement 52a zu einer werkzeugfreien Betätigung vorgesehen. In der Arretierstellung ist der Sitz 10a auf den Führungsschienen 22a, 24a fixiert. In der Arretierstellung können Kräfte, die auf den Sitz 10a einwirken, über die Aufständermodule 28a, 30a sowie die Befestigungselemente 44a, 46a, 50a in die Führungsschienen 22a, 24a und damit den Kabinenboden eingeleitet werden. In der Verschiebestellung ist der Sitz in Verschieberichtung der Führungsschienen 22a, 24a beweglich mit den Führungsschienen 22a, 24a verbunden. In der Verschiebestellung kann der Sitz 10a axial auf den Führungsschienen 22a, 24a verschoben werden. Das Auslöseelement 52a ist als eine Gepäckstange ausgebildet. Das als Gepäckstange ausgebildete Auslöseelement 52a ist unterhalb des Sitzbodens 38a angeordnet und dazu vorgesehen, ein Durchrutschen von Gepäckstücken unterhalb des Sitzes 10a zu verhindern. Das als Gepäckstange ausgebildete Auslöseelement 52a erstreckt sich im Wesentlichen über die gesamte Breite der Sitzreihe 16a. Dabei erstreckt sich das Auslöseelement 52a von einem ersten seitlichen Ende des linken Sitzes der Sitzreihe 16a bis zu einem zweiten seitlichen Ende des rechten Sitzes der Sitzreihe 16a. Dabei ist das Auslöseelement 52a in dem Bereich der vorderen Sitzfußeinheiten 40a der Aufständermodule 28a, 30a angeordnet. An seinen seitlichen Enden erstreckt sich das als Gepäckstange ausgebildete Auslöseelement 52a, in Sitzrichtung gesehen, nach hinten. In einem hinteren Bereich erstreckt sich das als Gepäckstange ausgebildete Auslöseelement 52a nach oben in Richtung des Sitzbodens. Das als Gepäckstange ausgebildete Auslöseelement 52a ist beweglich mit den Aufständermodulen 28a, 30a verbunden. Zur Lagerung des als Gepäckstange ausgebildeten Auslöseelements 52a weisen die Aufständermodule 28a, 30a an ihren vorderen Sitzfußeinheiten 40a jeweils eine Lageraufnahme 54a auf. Die Lageraufnahmen 54a sind als Gleitlager ausgebildet. Über die Lageraufnahmen 54a ist das als Gepäckstange ausgebildete Auslöseelement 52a schwenkbar zu den Aufständermodulen 28a, 30a gelagert.

Je Befestigungselement 44a, 50a weist der Sitz 10a ein Kopplungselement 56a auf. Die Kopplungselemente 56a verbinden das Auslöseelement 52a mit dem jeweiligen Verriegelungselement 48a des entsprechenden Befestigungselements 44a, 50a. Die Kopplungselemente 56a für die beiden Befestigungselemente 44a, 50a sind dabei gleich ausgebildet, weswegen im Folgenden lediglich das Verriegelungselement 48a zur Betätigung des Befestigungselements 44a näher beschrieben wird. Zur Erläuterung des nicht näher dargestellten Kopplungselements für das Befestigungselement 50a kann die Beschreibung des Kopplungselements 56a herangezogen werden. Das Kopplungselement 56a ist als ein Betätigungshebel ausgebildet. An einem ersten Ende ist das Kopplungselement 56a starr mit dem Auslöseelement 52a verbunden. Durch die starre Kopplung des Kopplungselements 56a mit dem Auslöseelement 52a wird eine Verdrehung des Auslöseelements 52a in eine Verschwenkung des Auslöseelements 52a umgesetzt. An seinem zweiten Ende weist das Kopplungselement 56a ein Formschlusselement 58a auf. Das Formschlusselement 58a ist zu einer formschlüssigen Kopplung mit dem Verriegelungselement 48a vorgesehen. Das Formschlusselement 58a des Kopplungselements 56a umgreift einen Kopf 60a des Verriegelungselements 48a formschlüssig. Grundsätzlich ist es auch denkbar, dass das Formschlusselement 58a auf eine andere Weise ausgebildet ist und in einer entsprechenden anderen Weise formschlüssig mit dem Verriegelungselement 48a verbunden ist. Durch die Kopplung des Kopplungselements 56a mit dem Verriegelungselement 48a wird eine Bewegung des Auslöseelements 52a in eine Bewegung des Verriegelungselements 48a umgesetzt. Dadurch kann das Verriegelungselement 48a mittels des Auslöseelements 52a zwischen seiner Verriegelstellung und seiner Entriegelstellung verstellt werden. In einer ersten Stellung ist das Auslöseelement 52a in einer Neutralstellung und das Kopplungselement 56a ist so ausgerichtet, dass das Verriegelungselement 48a in seiner Verriegelstellung ist. Dadurch sind in der Neutralstellung des Auslöseelements 52a beide vorderen Befestigungselemente 44a, 50a verriegelt und der Sitz 10a ist auf den Führungsschienen 22a, 24a fixiert. Wird das Auslöseelement 52a aus seiner Neutralstellung in eine Betätigungsstellung verdreht, wird das Verriegelungselement 48a durch das Kopplungselement 56a aus seiner Verriegelstellung in seine Entriegelstellung bewegt.

Grundsätzlich wäre es auch denkbar, dass die hinteren Befestigungselemente 46a zur Anbindung der hinteren Sitzfußeinheiten 42a der Aufständermodule 28a, 30a ein Verriegelungselement aufweisen und zwischen einer Verriegelstellung und einer Entriegelstellung verstellbar sind und die vorderen Befestigungselemente 44a, 50a zur Anbindung der vorderen Sitzfußeinheiten 40a der Aufständermodule 28a, 30a als Loslager ausgebildet sind.

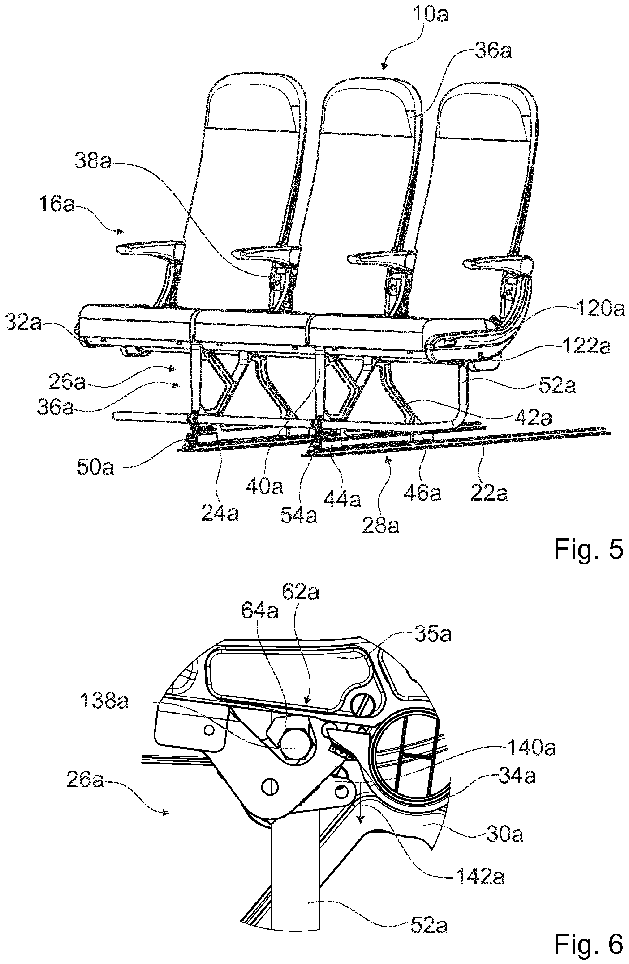

Der Sitz 10a weist einen Verriegelungsmechanismus 62a auf. Der Verriegelungsmechanismus 62a ist dazu vorgesehen, das Auslöseelement 52a in seiner Neutralstellung zu fixieren. Der Verriegelungsmechanismus 62a ist an einem Ende des als Gepäckstange ausgebildeten Auslöseelements 52a angeordnet. Dabei ist der Verriegelungsmechanismus 62a an einer Unterseite eines gangseitigen Sitzes der ersten Sitzreihe 16a angeordnet. Der Verriegelungsmechanismus 62a ist hinter einem Rammschutz 136a des Sitzes 10a angeordnet. Der Verriegelungsmechanismus 62a ist als ein Schnappmechanismus ausgebildet. Der Verriegelungsmechanismus 62a umfasst ein Formschlusselement 64a. Über das Formschlusselement 64a wird das Auslöseelement 52a in seiner Neutralstellung fixiert. Das Auslöseelement 52a ist als ein schwenkbarer Haken ausgebildet, der mit der Aufständereinheit 26a verbunden ist. Der Verriegelungsmechanismus 62a weist einen Verriegelungsbolzen 138a auf, der fest mit dem Auslöseelement 52a verbunden ist. In einem verriegelten Zustand ist der Verriegelungsbolzen 138a formschlüssig mit dem Formschlusselement 64a verbunden. In der Figur 6 ist der verriegelte Zustand des Verriegelungsmechanismus 62a gezeigt, in dem der Verriegelungsbolzen 138a in dem Formschlusselement 64a angeordnet ist. Ist der Verriegelungsbolzen 138a in dem Formschlusselement 64a angeordnet, sind der Verriegelungsbolzen 138a und damit das Auslöseelement 52a in alle Richtungen befestigt. Ein Entriegeln des Verriegelungsmechanismus 62a durch Krafteinwirkung auf das als Gepäckstange ausgebildete Auslöseelement 52a wird dadurch vorteilhaft verhindert. Der Verriegelungsmechanismus 62a umfasst ein Betätigungselement 140a. Das Betätigungselement 140a ist dazu vorgesehen, den Verriegelungsmechanismus 62a zu entriegeln. Das Betätigungselement 140a ist als ein Hebelelement ausgebildet, das mit dem Formschlusselement 64a verbunden ist. Das Betätigungselement 140a ist zur Entriegelung des Verriegelungsmechanismus 62a dazu vorgesehen, in einer Entriegelrichtung 142a bewegt zu werden. Die Entriegelrichtung 142a ist dabei in Richtung einer Aufständerebene gerichtet. Zur Betätigung weist das Betätigungselement 140a eine Öffnung auf, in der ein Zugelement angebracht werden kann, das hier nicht näher dargestellt ist. Durch die Anbindung eines Zugelements kann eine einfache Entriegelung erreicht werden. Grundsätzlich ist es auch denkbar, dass die Öffnung des Betätigungselements 140a eine spezielle Form aufweist, sodass zum vorteilhaften Bedienen des Betätigungselements 140a ein entsprechendes Werkzeug benötigt wird. Dadurch kann vorteilhaft gewährleistet werden, dass nur autorisierte Personen den Verriegelungsmechanismus 62a entriegeln. Durch die Bewegung des Betätigungselements 140a in die Entriegelrichtung 142a wird das Formschlusselement 64a verdreht und gibt dadurch den Verriegelungsbolzen 138a und damit das Auslöseelement 52a nach schräg oben frei. In einem entriegelten Zustand ist der Verriegelungsbolzen 138a von dem Formschlusselement 64a gelöst. Dadurch kann das Auslöseelement 52a verschwenkt werden. Zum Verriegeln wird der Verriegelungsbolzen 138a durch Zurückschwenken des Auslöseelements 52a wieder in formschlüssigen Kontakt mit dem Formschlusselement 58a gebracht, wodurch dieses in der Neutralstellung des Auslöseelements 52a wieder verrastet. Dabei wird das Formschlusselement 58a beispielsweise durch ein Rastelement oder durch eine von einem Federelement aufgebrachte Federkraft in dieser Stellung gehalten..

Der Verriegelungsmechanismus 62a ist in einem voll montierten Zustand des Sitzes 10a von einem Abdeckelement 120a abgedeckt. Der Verriegelungsmechanismus 62a weist ein Anzeigeelement 122a auf. Das Anzeigeelement 122a ist dazu vorgesehen, anzuzeigen, ob der Verriegelungsmechanismus 62a verriegelt ist oder nicht. Das Anzeigeelement 122a ist in dem Abdeckelement 120a angeordnet. Das Anzeigeelement 122a ist als ein mechanisches Element ausgebildet. Das Anzeigeelement 122a ist dazu vorgesehen, ein optisches Signal auszugeben. Grundsätzlich ist es auch denkbar, dass das Anzeigeelement 122a zusätzlich zu dem optischen Signal in dem Moment, in dem der Verriegelungsmechanismus 62 einrastet, ein akustisches Signal ausgibt. Grundsätzlich ist es ebenso denkbar, dass das Anzeigeelement 122a als ein elektrisches oder elektromagnetisches Element ausgebildet ist, das ein optisches Signal ausgibt.

Der zweite Sitz 12a umfasst eine Aufständereinheit 66a, über die der Sitz 12a aufgeständert ist. Über die Aufständereinheit 66a sind alle Sitze 12a der zweiten Sitzreihe 18a auf dem Kabinenboden aufgeständert. Die Aufständereinheit 66a umfasst ein erstes Aufständermodul 68a und ein zweites Aufständermodul 70a. Das erste Aufständermodul 68a ist mit der ersten Führungsschiene 22a verbunden. Das zweite Aufständermodul 70a ist mit der zweiten Führungsschiene 24a verbunden. Der zweite Sitz 12a ist über die Aufständermodule 68a, 70a mit den gleichen Führungsschienen 22a, 24a gekoppelt wie das erste Sitz 10a über dessen Aufständermodule 28a, 30a. Das erste Aufständermodul 68a und das zweite Aufständermodul 70a sind im Wesentlichen identisch ausgebildet. Dabei ist es denkbar, dass die beiden Aufständermodule 68a, 70a unterschiedlich ausgebildet sind. Da die beiden Aufständermodule 68a, 70a gleich ausgebildet sind, wird in der folgenden Beschreibung lediglich das erste Aufständermodul 68a näher beschrieben. Die Aufständereinheit 66a weist zwei Querträger 72a, 74a auf. Die Querträger 72a, 74a verlaufen parallel zueinander. Die Querträger 72a, 74a sind als Tragrohre ausgebildet. Der Querträger 72a ist als ein vorderes Tragrohr ausgebildet. Der Querträger 74a ist als hinteres Tragrohr ausgebildet. Der Querträger 72a ist dabei in Sitzrichtung des Sitzes 12a vor dem Querträger 74a angeordnet. Die Querträger 72a, 74a erstrecken sich über die gesamte Breite aller Sitze 12a der Sitzreihe 18a. Über die Querträger 72a, 74a werden Kräfte aus den Sitzen 12a der Sitzreihe 18a in die Aufständermodule 68a, 70a geleitet. Der Sitz 12a umfasst weiter eine Rückenlehne 76a sowie einen Sitzboden 78a. Der Sitzboden 78a und die Rückenlehne 76a sind mit der Aufständereinheit 66a gekoppelt. Dabei sind die Rückenlehne 76a und der Sitzboden 78a beweglich zueinander gelagert, sodass zumindest zwei unterschiedliche Sitzpositionen dargestellt werden können. Die Rückenlehne 76a und der Sitzboden 78a sind dabei über nicht näher beschriebene Befestigungsmittel mit der Aufständereinheit 66a verbunden. Der Sitzboden 78a ist dabei schwenkbar mit der Aufständereinheit 66a verbunden und kann so zwischen einer Gebrauchsstellung, in der ein Passagier auf dem Sitzboden 78a sitzen kann, und einer Verstaustellung, in der der Sitzboden 78a nach hinten in Richtung der Rückenlehne 76a verschwenkt ist, verstellt werden. Dabei sind die Rückenlehne 76a und der Sitzboden 78a auf eine aus dem Stand der Technik bekannte Weise mit der Aufständereinheit 66a verbunden.

Das Aufständermodul 68a des Sitzes 12a bildet eine vordere Sitzfußeinheit 80a und eine hintere Sitzfußeinheit 82a aus. Die vordere Sitzfußeinheit 80a bildet einen vorderen Sitzfuß aus, der den Sitz 12a in einem vorderen Bereich zu der Führungsschiene 22a abstützt. Die hintere Sitzfußeinheit 82a bildet einen hinteren Sitzfuß aus, der den Sitz 12a in einem hinteren Bereich zu der Führungsschiene 22a abstützt. Das Aufständermodul 68a weist einen Grundkörper 84a auf. Der Grundkörper 84a bildet die hintere Sitzfußeinheit 82a sowie einen Tragbereich 86a zwischen den beiden Querträgern 72a, 74a aus. In dem Tragbereich 86a bildet der Grundkörper 84a eine Lageraufnahme 88a für den vorderen Querträger 72a und eine Lageraufnahme 90a für den hinteren Querträger 74a aus. Über die Lageraufnahmen 88a, 90a ist der Grundkörper 84a starr mit den Querträgern 72a, 74a verbunden. Der Grundkörper 84a bildet die hintere Sitzfußeinheit 82a und den Tragbereich 86a einstückig miteinander aus.

Zur Anbindung an die Führungsschiene 22a weist der Sitz 12a ein erstes Befestigungselement 92a und ein zweites Befestigungselement 94a auf. Das erste Befestigungselement 92a ist als ein vorderes Befestigungselement ausgebildet und dazu vorgesehen, die vordere Sitzfußeinheit 80a mit der Führungsschiene 22a zu koppeln. Dazu ist das erste Befestigungselement 92a fest mit der vorderen Sitzfußeinheit 80a verbunden. Das zweite Befestigungselement 94a ist als ein hinteres Befestigungselement ausgebildet und dazu vorgesehen, die hintere Sitzfußeinheit 82a mit der Führungsschiene 22a zu koppeln. Dazu ist das zweite Befestigungselement 94a starr mit der hinteren Sitzfußeinheit 82a verbunden. Das zweite, hintere Befestigungselement 94a ist dabei als ein Festlager ausgebildet. Grundsätzlich ist es auch denkbar, dass beide Befestigungselemente 92a, 94a als Festlager ausgebildet sind oder dass das vordere Befestigungselement 92a als ein Festlager und das hintere Befestigungselement 94a als ein Loslager ausgebildet ist. Das zweite Befestigungselement 94a ist formschlüssig mit der Führungsschiene 22a verbunden. Dabei ist das hintere Befestigungselement 94a über ein nicht näher dargestelltes Verriegelungselement fest mit der Führungsschiene 22a verbunden. Über das hintere Befestigungselement 94a können in einem verriegelten Zustand Kräfte in allen Richtungen in die Führungsschiene 22a eingeleitet werden.

Das erste Befestigungselement 92a ist als ein Loslager ausgebildet. Das erste Befestigungselement 92a ist formschlüssig mit der Führungsschiene 22a verbunden. Das Befestigungselement 92a ist dabei entlang der Verschieberichtung der Führungsschiene 22a verschiebbar gelagert. Das erste Befestigungselement 92a weist kein Fixierelement auf, mit dem das Befestigungselement 92a in Verschieberichtung auf der Führungsschiene 22a fixiert werden könnte. Kräfte in Verschieberichtung der Führungsschiene 22a können von dem ersten Befestigungselement 92a nicht auf die Führungsschiene 22a übertragen werden. Die vordere Sitzfußeinheit 80a des Aufständermoduls 68a ist relativ zu dem Grundkörper 84a des Aufständermoduls 68a beweglich gelagert. Zur beweglichen Lagerung der vorderen Sitzfußeinheit 80a weist das Aufständermodul 68a ein Schwenklager 96a auf. Das Schwenklager 96a ist von dem Grundkörper 84a und der vorderen Sitzfußeinheit 80a ausgebildet. Der Grundkörper 84a weist an seinem vorderen Ende, in einem Bereich unterhalb des vorderen Querträgers 72a, einen Aufnahmebereich 98a auf. Der Aufnahmebereich 98a weist eine im Wesentlichen dreiecksförmige Grundform auf. Der Aufnahmebereich 98a bildet dabei eine nicht näher dargestellte Aufnahmeausnehmung aus, in der ein Lagerbolzen 100a gelagert ist. Über den Lagerbolzen 100a ist die vordere Sitzfußeinheit 80a mittels einer Lageraufnahme schwenkbar gelagert. Innenwandungen des Aufnahmebereichs 98a, der dreiecksförmig ausgebildet ist, bilden Anschlagsflächen aus, an die die vordere Sitzfußeinheit 80a in ihren beiden Endpositionen anschlägt. Eine erste Endposition ist dabei als eine Gebrauchsstellung der vorderen Sitzfußeinheit 80a ausgebildet. Dabei schlägt die Sitzfußeinheit 80a in der Gebrauchsstellung mit einer Vorderseite an der vorderen Anschlagsfläche des Aufnahmebereichs 98a an. Die vordere Sitzfußeinheit 80a bildet einen Abstützbereich 102a aus. Der Abstützbereich 102a ist von einem Absatz an der Vorderseite der Sitzfußeinheit 80a ausgebildet. Der Abstützbereich 102a ist dazu vorgesehen, dass in der Gebrauchsstellung Kräfte von dem Grundkörper 84a direkt in die vordere Sitzfußeinheit 80a eingeleitet werden können. An einem vorderen Ende bildet der Grundkörper 84a eine korrespondierend zu dem Abstützbereich 102a ausgebildete Anlagefläche 104a aus. In der Gebrauchsstellung liegt die vordere Sitzfußeinheit 80a an der Anlagefläche 104a des Grundkörpers 84a an. Dadurch kann in der Gebrauchsstellung der vorderen Sitzfußeinheit 80a eine Kraft direkt zwischen der Anlagefläche 104a und dem Abstützbereich 102a übertragen werden. Eine zweite Endposition der vorderen Sitzfußeinheit 80a ist als eine Verstaustellung ausgebildet. In der Verstaustellung ist die vordere Sitzfußeinheit 80a nach hinten, in Richtung der hinteren Sitzfußeinheit 82a, verschwenkt. Die vordere Sitzfußeinheit 80a liegt dabei mit einer hinteren Rückseite an der Anschlagsfläche des Aufnahmebereichs 98a an. Die vordere Sitzfußeinheit 80a weist weiter ein Abstützelement 106a auf, das in einem mittleren Bereich der Sitzfußeinheit 80a angeordnet ist. Das Abstützelement 106a ist als eine Erhebung auf der Rückseite der vorderen Sitzfußeinheit 80a ausgebildet. In der Verstaustellung liegt das Abstützelement 106a an einer Vorderseite der hinteren Sitzfußeinheit 82a an. Über das Abstützelement 106a können in der Verstaustellung der vorderen Sitzfußeinheit 80a Kräfte in die hintere Sitzfußeinheit 82a eingeleitet werden. Das Aufständermodul 68a weist dabei lediglich eine Lagereinheit, nämlich das Schwenklager 96a auf, über die ein tragender Teil der Aufständereinheit 66a zu einem beweglichen Teil der Aufständereinheit 66a gelagert ist. Dadurch kann sowohl in der Verstaustellung als auch in der Gebrauchsstellung ein sicherer Stand des Sitzes 12a erreicht werden.

Der Sitz 12a weist einen Auslösehebel 124a auf, über den die vordere Sitzfußeinheit 80a verschwenkbar ist. Der Auslösehebel 124a ist einstückig mit der vorderen Sitzfußeinheit 80a ausgebildet. Grundsätzlich ist es ebenso denkbar, dass der Auslösehebel 124 lediglich fest mit der vorderen Sitzfußeinheit 80a verbunden ist. Der Auslösehebel 124a ist an einem oberen Ende der vorderen Sitzfußeinheit 80a angeordnet. Zur Betätigung des Auslösehebels 124a muss dabei zunächst der Sitzboden 78a von seiner Gebrauchsstellung in seine Verstaustellung gebracht werden. In der Gebrauchsstellung der vorderen Sitzfußeinheit 80a ist der Auslösehebel 124a auf einer Höhe des vorderen Querträgers 72a angeordnet. In der Gebrauchsstellung der vorderen Sitzfußeinheit 80a erstreckt sich der Auslösehebel 124a nicht über den vorderen Querträger 72a. In der Verstaustellung der vorderen Sitzfußeinheit 80a ist der Auslösehebel 124a nach oben von der Aufständerebene weggerichtet. Dabei erstreckt sich der Auslösehebel 124a in der Verstaustellung der vorderen Sitzfußeinheit 80a über den vorderen Querträger 72a. Dadurch ist es in der Verstaustellung der vorderen Sitzfußeinheit 80a nicht möglich, den Sitzboden 78a in seine Gebrauchsstellung zu bringen, da der Auslösehebel 124a den Weg versperrt. Dadurch kann vorteilhaft eine fehlerhafte Aufständerung des Sitzes 12a verhindert werden. Der Sitz 12a ist durch den Auslösehebel 124 vorteilhaft in einer Verstaustellung der vorderen Sitzfußeinheit 80a nicht benutzbar. Der Auslösehebel 124a kann dabei in beiden Stellungen einfach von einem Personal ergriffen werden, um die vordere Sitzfußeinheit 80a zwischen der Verstaustellung und der Gebrauchsstellung zu verstellen.

Der Sitz 12a umfasst einen Verriegelungsmechanismus 108a. Der Verriegelungsmechanismus 108a ist dazu vorgesehen, die vordere Sitzfußeinheit 80a in der Gebrauchsstellung und in der Verstaustellung zu sichern. Der Verriegelungsmechanismus 108a umfasst einen federbelasteten Verriegelungspin 110a. Der Verriegelungspin 110a ist in der vorderen Sitzfußeinheit 80a beweglich gelagert. Dazu ist der Verriegelungspin 110a in einem Aufnahmeloch der vorderen Sitzfußeinheit 80a axial verschiebbar gelagert. Dabei ist in der Sitzfußeinheit 80a ein Federelement angeordnet, das auf den Verriegelungspin 110a eine Schließkraft ausübt, durch die der Verriegelungspin 110a in eine Schließstellung gedrückt wird. Der Verriegelungsmechanismus 108a weist zwei von dem Grundkörper 84a ausgebildete Aufnahmelöcher 112a, 114a auf. Die Aufnahmelöcher 112a, 114a sind in dem Aufnahmebereich 98a angeordnet. Die Aufnahmelöcher 112a, 114a sind äquivalent zu dem Verriegelungspin 110a ausgebildet. Die Aufnahmelöcher 112a, 114a sind dazu vorgesehen, dass der Verriegelungspin 110a zur Verriegelung der vorderen Sitzfußeinheit 80a formschlüssig in den Aufnahmelöchern 112a, 114a angeordnet wird. Dabei ist das Aufnahmeloch 112a der Gebrauchsstellung der vorderen Sitzfußeinheit 80a zugeordnet. Ist die vordere Sitzfußeinheit 80a in der Gebrauchsstellung, ist der Verriegelungspin 110a formschlüssig in dem Aufnahmeloch 112a angeordnet und verriegelt so die Sitzfußeinheit 80a in der Gebrauchsstellung. Das Aufnahmeloch 114a ist der Verstaustellung der vorderen Sitzfußeinheit 80a zugeordnet. Ist die vordere Sitzfußeinheit 80a in der Verstaustellung, ist der Verriegelungspin 110a formschlüssig in dem Aufnahmeloch 114a angeordnet und verriegelt so die Sitzfußeinheit 80a in der Verstaustellung. Zur Verstellung der Sitzfußeinheit 80a zwischen der Verstaustellung und der Gebrauchsstellung betätigt ein Benutzer den Verriegelungspin 110a, indem er den Verriegelungspin 110a entgegen der Federkraft des Federelements axial aus dem entsprechenden Aufnahmeloch 112a, 114a zieht. Nach der Verstellung in die gewünschte Stellung rastet der Verriegelungspin 110a durch die Federkraft des Federelements selbsttätig in dem entsprechenden Aufnahmeloch 112a, 114a ein.

Der Sitz 12a weist wenigstens eine Gebrauchsstellung und eine Verstaustellung auf. Der Sitz 12a weist eine erste Gebrauchsstellung auf, die als eine TTLPositionausgebildet ist.

In der TTL-Position ist die Rückenlehne 76a und der Sitzboden 78a im Wesentlichen rechtwinklig zueinander ausgerichtet. In der TTL-Position ist die Rückenlehne 76a in einer aufrechten Stellung und im Wesentlichen senkrecht zu dem Kabinenboden ausgerichtet. Der Sitz 12a weist weitere Gebrauchspositionen, wie insbesondere eine Komfortstellung auf, in der die Rückenlehne 76a nach hinten zu dem Sitzboden 78a verschwenkt ist. In der Verstaustellung ist der Sitz 12a

Die beiden Sitze 10a, 12a der Sitzreihen 16a, 18a können in unterschiedlichen Stellungen zueinander angeordnet sein. Die Sitze 10a, 12a weisen wenigstens eine Gebrauchsstellung und eine Verstaustellung auf. Die Sitze 10a, 12a weisen eine erste Gebrauchsstellung auf, die als eine TTL-Position ausgebildet ist. In der TTL-Position sind die Rückenlehnen 36a, 76a und der Sitzboden 38a, 78a der Sitze 10a, 12a jeweils im Wesentlichen rechtwinklig zueinander ausgerichtet. In der TTL-Position sind die Rückenlehnen 36a, 76a in einer aufrechten Stellung und im Wesentlichen senkrecht zu dem Kabinenboden ausgerichtet. Die Sitze 10a, 12a weisen weitere Gebrauchspositionen, wie insbesondere jeweils eine Komfortstellung auf, in der die Rückenlehnen 36a, 76a nach hinten zu dem Sitzboden 38a, 78a verschwenkt ist. In einer Gebrauchsstellung beider Sitze 10a, 12a weisen die beiden Sitze 10a, 12a, gemessen von einer Vorderkante zu einer Vorderkante, einen Abstand von 28 Zoll mm auf. Grundsätzlich ist es auch denkbar, dass die Sitze 10a, 12a einen anderen, dem Fachmann als sinnvoll erscheinenden Abstand aufweisen, wie insbesondere beispielsweise 27 Zoll oder 29 Zoll. Beide Sitze 10a, 12a sind dabei in ihrer Gebrauchsstellung verriegelt. Auf den Sitzen 10a, 12a beider Sitzreihen 16a, 18a können dabei Passagiere sitzen. Zur Erhöhung einer Beinfreiheit für die Sitze 10a der vorderen Sitzreihe 16a können die Sitze 12a der hinteren Sitzreihe 18a in eine Verstaustellung gebracht werden. Dazu werden zunächst die vorderen Sitzfußeinheiten 80a der Aufständermodule 68a, 70a der hinteren Sitze 12a von ihrer Gebrauchsstellung in ihre Verstaustellung verschwenkt. Dazu werden zunächst die Verriegelungspins 110a aus den entsprechenden Aufnahmelöchern 112a gelöst und die vordere Sitzfußeinheit 80a wird um den Lagerbolzen 100a des Schwenklagers 96a in die Verstaustellung verschwenkt. Bei der Verschwenkung der vorderen Sitzfußeinheit 80a wird dabei die Aufständereinheit 66a zumindest teilweise angehoben. Die vorderen Befestigungselemente 92a, über die die Aufständermodule 68a, 70a mit den Führungsschienen 22a, 24a verbunden sind, werden entlang den Führungsschienen 22a, 24a in Richtung der hinteren Befestigungselemente 94a verschoben, bis die vordere Sitzfußeinheit 80a mit dem Abstützelement 106a an der hinteren Sitzfußeinheit 82a anliegt. Anschließend werden die Sitze 10a der vorderen Sitzreihe 16a von der von ihrer Verriegelstellung in ihre Verschiebestellung gebracht, indem die vorderen Befestigungselemente 44a, 50a über das als Gepäckstange ausgebildete Auslöseelement 52a von ihrer Verriegelstellung in ihre Entriegelstellung gebracht werden. Dazu wird das Auslöseelement 52a mittels des Verriegelungsmechanismus 62a entriegelt und verdreht. Sind die Sitze 10a der Sitzreihe 16a in der Verschiebestellung, werden die Sitze 10a über auf den Führungsschienen 22a, 24a in Richtung der Sitze 12a der zweiten Sitzreihe 18a verschoben. Die vorderen Sitze 10a werden dabei so weit in Richtung der hinteren Sitze 12a verfahren, dass die hinteren Sitzfußeinheiten 42a der Aufständermodule 28a, 30a der Sitze 10a teilweise überlappend mit den Aufständermodulen 68a, 70a der Sitze 12a angeordnet sind. Die Aufständermodule 28a, 30a der Sitze 10a erstrecken sich bis unter die Grundkörper 84a der Aufständermodule 68a, 70a der hinteren Sitze 12a. Die hinteren Befestigungselemente 46a sind dabei unterhalb der Aufständereinheit 26a, insbesondere unterhalb des vorderen Querträgers 32a, angeordnet. Die Sitze 10a, 12a bilden jeweils eine Hüllkurve 126a, 128a aus. Die Hüllkurven 126a, 128a bilden dabei jeweils ein imaginäres Rechteck um die größten Abmaße der Sitze 10a, 12a aus. In den Gebrauchsstellungen beider Sitze 10a, 12a sind die Hüllkurven126a, 128a beabstandet zueinander angeordnet. In der Verstaustellung des Sitzes 12a, bei der der vordere Sitz 10a an den Sitz 12a herangeschoben ist (Figur 2), weisen die Hüllkurven 126a, 128a eine Überschneidung von 35 Prozent auf. Sind die vorderen Sitze 10a maximal nach hinten verschoben, werden die Sitze 10a über das Auslöseelement 52a und die Befestigungselemente 44a wieder in eine Verriegelstellung gebracht. Die vorderen Sitze 10a der Sitzreihe 16a sind dann wieder in ihrer Gebrauchsstellung und können von Passagieren genutzt werden. Dabei weisen die Sitze 10a durch die Verschiebung nach hinten nun eine erhöhte Beinfreiheit auf, wodurch insbesondere eine Komforterhöhung für die Sitze 10a erreicht werden kann. Die Sitze 12a der hinteren Sitzreihe 18a sind in einer Verstaustellung und können nicht von Passagieren genutzt werden. In der Verstaustellung weisen die Rückenlehnen 76a der Sitze 12a eine gleiche Position auf wie in der Gebrauchsstellung. Insbesondere weisen die Rückenlehnen 76a der Sitze 12a in der Verstaustellung eine gleiche Ausrichtung wie in der TTL-Position aus. Dabei sind die Rückenlehnen 76a der Sitze 12a in der Verstaustellung auf einer gleichen Höhe angeordnet wie in der Verstaustellung. Die Rückenlehnen 76a der Sitze 12a werden bei einer Verstellung von der Gebrauchsstellung in die Verstaustellung nicht relativ zu den Aufständermodulen 68a, 70a der Sitze 12a verstellt. Die Rückenlehne 76a des hinteren Sitzes 12a ist dabei in der Verstaustellung in einer aufrechten Position. Die Rückenlehne 76a ist dabei im Wesentlichen gleich ausgerichtet wie in der Gebrauchsstellung. Der Sitz 12a weist an einer Rückseite der Rückenlehne76a ein als Tisch ausgebildetes Nutzelement 130a auf. Das Nutzelement 130a ist dabei in den Figuren in einer Verstaustellung angedeutet. Das als Tisch ausgebildete Nutzelement 130a kann dabei in der Verstaustellung des Sitzes 12a von einem hinter dem Sitz 12a sitzenden Passagier genutzt werden. Ebenso weist die Rückenlehne 76a des zweiten Sitzes 12a sowohl in der Verstaustellung als auch in der Gebrauchsstellung des Sitzes 12a eine gleiche Höhe auf. Insbesondere weist die Rückenlehne 76a des zweiten Sitzes 12a in der Verstaustellung des zweiten Sitzes 12a keine größere Höhe auf als in der Gebrauchsstellung. Dadurch können vorteilhaft Sicherheitsvorgaben in Flugzeugkabinen eingehalten werden.

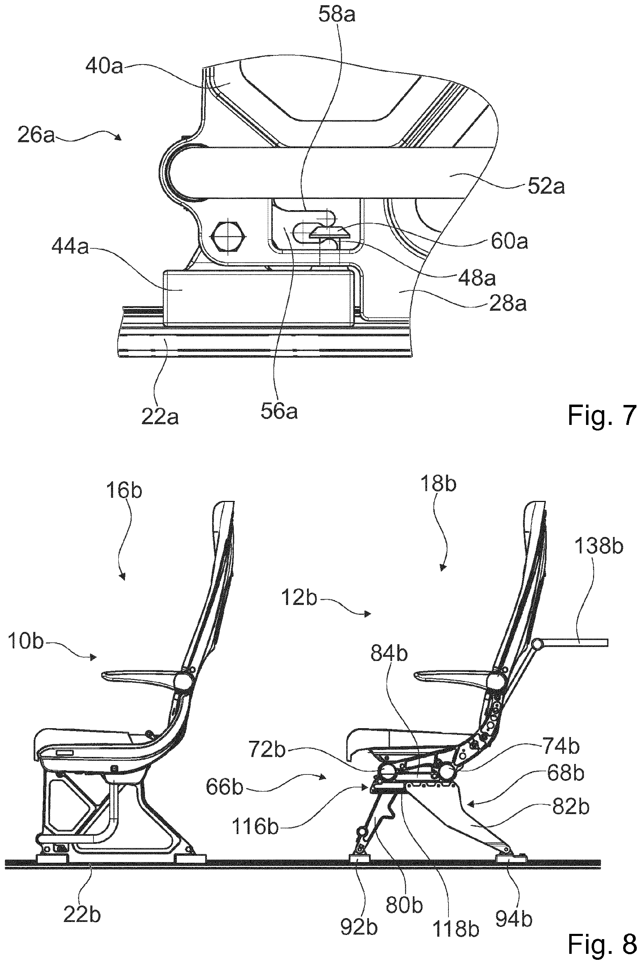

In den Figuren 8 bis 11 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8 bis 11 ist der Buchstabe a durch die Buchstaben b und c ersetzt.

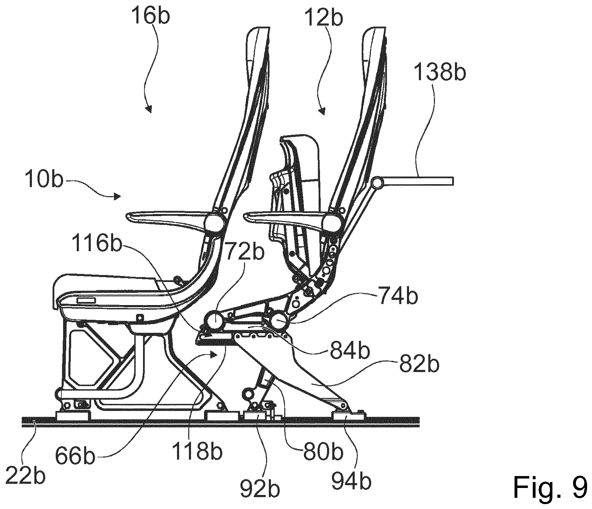

Die Figuren 8 und 9 zeigen ein zweites Ausführungsbeispiel des erfindungsgemäßen Transportsitzsystems. Das Transportsitzsystem ist als ein Flugzeugsitzsystem ausgebildet. Das Transportsitzsystem umfasst einen ersten Sitz 10b. Weiter umfasst das Transportsitzsystem einen zweiten Sitz 12b. Der erste Sitz 10b ist als ein vorderer Sitz 10b ausgebildet. Der zweite Sitz 12b ist als ein hinterer Sitz 12b ausgebildet. Die beiden Sitze 10b, 12b sind als ein Sitzpaar 14b ausgebildet. Die Sitze 10b, 12b sind dabei jeweils als ein Teil einer Sitzreihe 16b, 18b ausgebildet. Eine Sitzreihe 16b, 18b umfasst dabei jeweils drei nebeneinander angeordnete Sitze 10b, 12b. Eine Flugzeugkabine weist zwei parallel in einem Kabinenboden der Flugzeugkabine angebrachte Befestigungsschienen 20b auf. Das Transportsitzsystem umfasst eine erste Führungsschiene 22b und eine zweite Führungsschiene. Die Sitze 10b, 12b, sind über die Führungsschienen 22b mit dem Kabinenboden gekoppelt. Der erste Sitz 10b ist als ein vorderer Sitz ausgebildet. Die Sitze 10b der vorderen Sitzreihe 16b sind äquivalent zu den vorderen Sitzen aus dem ersten Ausführungsbeispiel ausgebildet und werden deshalb im Folgenden nicht näher beschrieben.

Im Unterschied zu dem ersten Ausführungsbeispiel sind die hinteren Sitze 12b der Sitzreihe 18b anders ausgebildet. Der zweite Sitz 12b umfasst eine Aufständereinheit 66b, über die der Sitz 12b aufgeständert ist. Über die Aufständereinheit 66b sind alle Sitze 12b der zweiten Sitzreihe 18b auf dem Kabinenboden aufgeständert. Die Aufständereinheit 66b umfasst ein erstes Aufständermodul 68b und ein zweites Aufständermodul. Das erste Aufständermodul 68b ist mit der ersten Führungsschiene 22b verbunden. Das zweite Aufständermodul ist mit der zweiten Führungsschiene verbunden. Der zweite Sitz 12b ist über die Aufständermodule 68b mit den gleichen Führungsschienen 22b gekoppelt wie das erste Sitz 10b über dessen Aufständermodule. Das erste Aufständermodul 68b und das zweite Aufständermodul sind im Wesentlichen identisch ausgebildet. Die Aufständereinheit 66b weist zwei Querträger 72b, 74b auf. Die Querträger 72b, 74b verlaufen parallel zueinander. Die Querträger 72b, 74b sind als Tragrohre ausgebildet.

Das Aufständermodul 68b des Sitzes 12b bildet eine vordere Sitzfußeinheit 80b und eine hintere Sitzfußeinheit 82b aus. Die vordere Sitzfußeinheit 80b bildet einen vorderen Sitzfuß aus, der den Sitz 12b in einem vorderen Bereich zu der Führungsschiene 22b abstützt. Die hintere Sitzfußeinheit 82b bildet einen hinteren Sitzfuß aus, der den Sitz 12b in einem hinteren Bereich zu der Führungsschiene 22b abstützt. Das Aufständermodul 68b weist einen Grundkörper 84b auf. Der Grundkörper 84b bildet einen Tragbereich 86b zwischen den Querträgern 72b, 74b aus. Die hintere Sitzfußeinheit 82b ist starr mit dem Grundkörper 84b verbunden. Die hintere Sitzfußeinheit 82b ist über ein Befestigungselement 94b fest mit der Führungsschiene 22b verbunden. Die vordere Sitzfußeinheit 80b des Aufständermoduls 68b ist relativ zu dem Grundkörper 84b des Aufständermoduls 68b beweglich gelagert. Die vordere Sitzfußeinheit 80b ist über ein Befestigungselement 92b mit der Führungsschiene 22b verbunden. Zur beweglichen Lagerung der vorderen Sitzfußeinheit 80b weist das Aufständermodul 68b ein Linearlager 116b auf. Über das Linearlager 116b ist die vordere Sitzfußeinheit 80b entlang einer Verschiebeachse zu dem Grundkörper 84b verschiebbar. Der Grundkörper 84b bildet einen Teil des Linearlagers 116b aus. Der Grundkörper 84b bildet eine Führungsschiene 118b aus. Die Führungsschiene 118b bildet die Verschiebeachse aus, die parallel zu der Führungsschiene 22b verläuft. Das Linearlager bildet an einem oberen Ende der Sitzfußeinheit 80b, das dem Grundkörper 84b zugewandt ist, ein Führungselement aus, das in die Führungsschiene 118b des Linearlagers 116b formschlüssig eingreift. Über das Führungselement kann die Sitzfußeinheit 80b entlang der Führungsschiene 118b des Linearlagers 116b parallel verschoben werden. So kann die vordere Sitzfußeinheit 80b zwischen ihrer Gebrauchsstellung und ihrer Verstaustellung verschoben werden. Die beiden Sitze 10b, 12b der Sitzreihen 16b, 18b können, wie auch schon in dem vorhergehenden Ausführungsbeispiel, in unterschiedlichen Stellungen zueinander angeordnet sein. Eine Verstellung erfolgt dabei im Wesentlichen äquivalent zu der Verstellung in dem ersten Ausführungsbeispiel mit dem Unterschied, dass die vorderen Sitzfußeinheiten 80b der Aufständermodule 68b parallel zu dem Grundkörper 84b verschoben werden und nicht verschwenkt. Der Sitz 12b weist an einer Rückseite der Rückenlehne76b ein als Tisch ausgebildetes Nutzelement 130b auf. Das Nutzelement 130b ist dabei in den Figuren 8 und 9 in einer Gebrauchsstellung dargestellt. Das als Tisch ausgebildete Nutzelement 130a kann dabei in der Verstaustellung des Sitzes 12b von einem hinter dem Sitz 12b sitzenden Passagier genutzt werden.

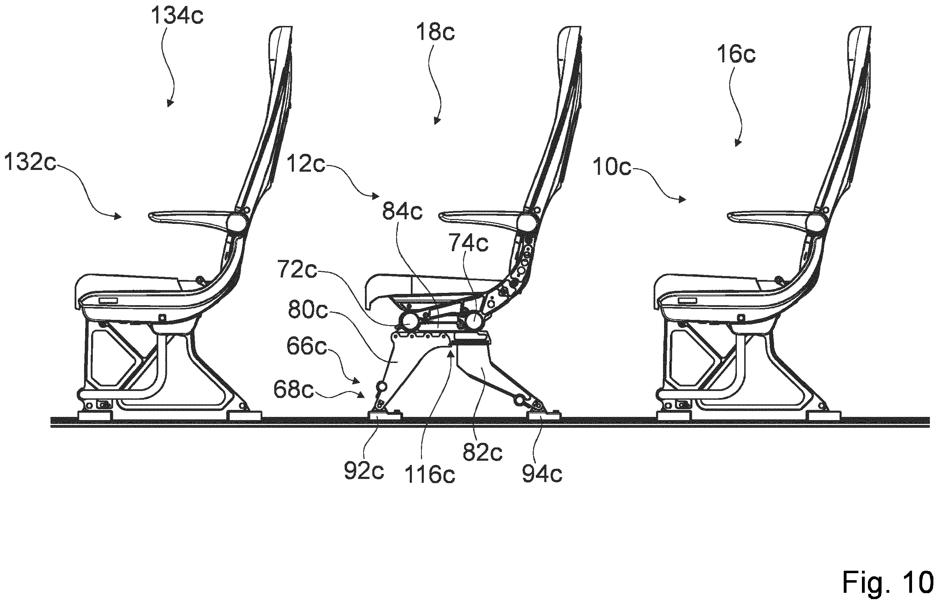

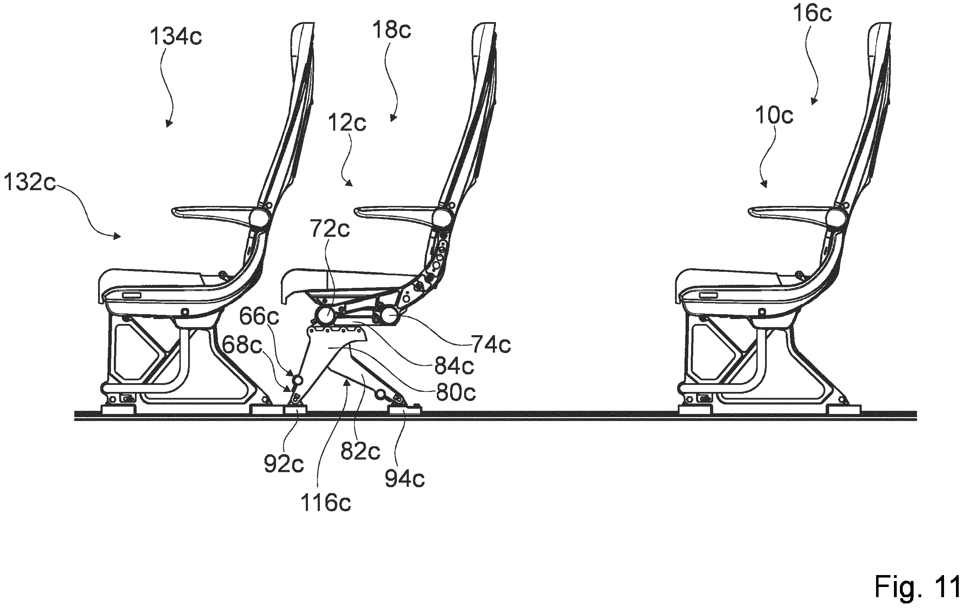

Die Figuren 10 und 11 zeigen ein drittes Ausführungsbeispiel des erfindungsgemäßen Transportsitzsystems. Das Transportsitzsystem ist als ein Flugzeugsitzsystem ausgebildet. Das Transportsystem weist zwei Führungsschienen 22c auf. Das Transportsitzsystem umfasst einen ersten Sitz 10c. Weiter umfasst das Transportsitzsystem einen zweiten Sitz 12c. Das Transportsitzsystem umfasst einen dritten Sitz 132c. Der dritte Sitz 132c ist als Teil einer dritten Sitzreihe 134c ausgebildet. Der dritte Sitz 132c ist vor dem zweiten Sitz 12c angeordnet. Im Unterschied zu den ersten beiden ersten Ausführungsbeispielen ist der erste Sitz 10c als ein hinterer Sitz 10c ausgebildet und der zweite Sitz 12c ist als ein vor dem hinteren Sitze 10c angeordneter mittlerer Sitz 12c ausgebildet. Der hintere Sitz 10c lässt sich mittels eines Auslöseelements zwischen einer Verriegelstellung und einer Verschiebestellung verstellen. Dies erfolgt äquivalent zu dem vorderen Sitz des ersten Ausführungsbeispiels. Der dritte vorderste Sitz 132c der Sitzreihe 134c ist äquivalent zu dem hinteren Sitz 10c ausgebildet. Dabei ist der vordere dritte Sitz 132c verschiebbar auf den Führungsschienen 22c angeordnet. Grundsätzlich wäre es ebenfalls denkbar, dass sowohl der vordere dritte Sitz 132c als auch der hintere Sitz 10c fest auf den Führungsschienen 22c angeordnet sind. Der zweite Sitz 12c umfasst eine Aufständereinheit 66c, über die der Sitz 12c aufgeständert ist. Über die Aufständereinheit 66c sind alle Sitze 12c einer zweiten Sitzreihe 18c auf dem Kabinenboden aufgeständert. Die Aufständereinheit 66c umfasst ein erstes Aufständermodul 68c und ein zweites Aufständermodul. Das erste Aufständermodul 68c ist mit der ersten Führungsschiene 22c verbunden. Das zweite Aufständermodul ist mit der zweiten Führungsschiene verbunden. Der zweite Sitz 12c ist über die Aufständermodule 68c mit den gleichen Führungsschienen 22c gekoppelt wie der erste Sitz 10c und der dritte Sitz 132c über deren entsprechende Aufständermodule. Das erste Aufständermodul 68c und das zweite Aufständermodul sind im Wesentlichen identisch ausgebildet. Die Aufständereinheit 66c weist zwei Querträger 72c, 74c auf. Die Querträger 72c, 74c verlaufen parallel zueinander. Die Querträger 72c, 74c sind als Tragrohre ausgebildet.

Das Aufständermodul 68c des Sitzes 12c bildet eine vordere Sitzfußeinheit 80c und eine hintere Sitzfußeinheit 82c aus. Die vordere Sitzfußeinheit 80c bildet einen vorderen Sitzfuß aus, der den Sitz 12c in einem vorderen Bereich zu der Führungsschiene 22c abstützt. Die hintere Sitzfußeinheit 82c bildet einen hinteren Sitzfuß aus, der den Sitz 12c in einem hinteren Bereich zu der Führungsschiene 22c abstützt. Das Aufständermodul 68c weist einen Grundkörper 84c auf. Der Grundkörper 84c bildet einen Tragbereich 86c zwischen den Querträgern 72c, 74c aus. Im Unterschied zu dem vorhergehenden Ausführungsbeispiel ist die vordere Sitzfußeinheit starr mit dem Grundkörper 84c verbunden. Die vordere Sitzfußeinheit 80c ist über ein Befestigungselement 92c mit der Führungsschiene 22c verbunden. Das Befestigungselement 92c weist ein nicht näher dargestelltes Fixiermittel auf, mit dem das Befestigungselement 92c fest und positionsfest mit der Führungsschiene 22c gekoppelt werden kann. In einer Verriegelstellung ist das Befestigungselement 92c fest mit der Führungsschiene 22c verbunden und in einer Entriegelstellung auf der Führungsschiene 22c verschiebbar. Die hintere Sitzfußeinheit 82c des Aufständermoduls 68c ist relativ zu dem Grundkörper 84c des Aufständermoduls 68c beweglich gelagert. Die hintere Sitzfußeinheit 82c ist über ein Befestigungselement 94c mit der Führungsschiene 22c verbunden. Das Befestigungselement 94c weist ein nicht näher dargestelltes Fixiermittel auf, mit dem das Befestigungselement 94c fest und positionsfest mit der Führungsschiene 22c gekoppelt werden kann. In einer Verriegelstellung ist das Befestigungselement 94c fest mit der Führungsschiene 22c verbunden und in einer Entriegelstellung auf der Führungsschiene 22c verschiebbar. Zur beweglichen Lagerung der hinteren Sitzfußeinheit 82c weist das Aufständermodul 68c ein Linearlager 116c auf. Über das Linearlager 116c ist die hintere Sitzfußeinheit 82c entlang einer Verschiebeachse zu dem Grundkörper 84c verschiebbar. Die Verschiebung der hinteren Sitzfußeinheit 82c erfolgt dabei äquivalent zu der Verschiebung der vorderen Sitzfußeinheit aus dem zweiten Ausführungsbeispiel.

Die drei Sitze 10c, 12c, 132c der Sitzreihen 16c, 18c, 134c können in unterschiedlichen Stellungen zueinander angeordnet sein. Dabei wird im Unterschied zu den vorhergehenden Ausführungsbeispielen die hintere Sitzfußeinheit 82c zwischen einer Gebrauchsstellung und einer Verstaustellung verschoben und anschließend der gesamte mittlere Sitz 12c auf den Führungsschienen 22c in Richtung des vorderen Sitzes 132c verschoben. Dadurch wird der nach vorne verschobene Sitz 12c in seine Verstaustellung verschoben, wobei die Sitze 10c, 132c in ihrer Gebrauchsstellung bleiben. Der dritte vordere Sitz 132c der Sitzreihe 134c wird nicht verschoben. Es ist deshalb denkbar, dass der vordere dritte Sitz 132c starr mit der Führungsschiene 22c verbunden ist. Grundsätzlich ist es dabei denkbar, dass der vordere Sitz 132c auf eine andere dem Fachmann als sinnvoll erscheinende Weise ausgebildet ist und starr in einer Befestigungsschiene, die in einem Kabinenboden eingelassen ist, fest fixiert ist. Grundsätzlich wäre es auch denkbar, dass anstelle des vorderen Sitzes 132c eine Bordwand der Flugzeugkabine angeordnet ist. Dabei wäre der Sitz 12c in einer Verriegelstellung an die Bordwand geschoben. Der hintere Sitz 10c bleibt dabei ebenfalls in seiner Position fixiert. Dadurch vergrößert sich ein Abstand zwischen dem hinteren Sitz 10c und dem mittleren Sitz 12c, der nun in seiner Verstaustellung ist. Dadurch kann eine Beinfreiheit für die Sitze 10c der Sitzreihe 16c vorteilhaft vergrößert werden. Ein Abstand zwischen dem vorderen dritten Sitz 132c und dem hinteren Sitz 10c bleibt gleich.

### Bezugszeichen

- 10: Sitz
- 12: Sitz
- 14: Sitzpaar
- 16: Sitzreihe
- 18: Sitzreihe
- 20: Befestigungsschiene
- 22: Führungsschiene
- 24: Führungsschiene
- 26: Aufständereinheit
- 28: Aufständermodul
- 30: Aufständermodul
- 32: Querträger
- 34: Querträger
- 36: Rückenlehne
- 38: Sitzboden
- 40: vordere Sitzfußeinheit
- 42: hintere Sitzfußeinheit
- 44: Befestigungselement
- 46: Befestigungselement
- 48: Verriegelungselement
- 50: Befestigungselement
- 52: Auslöseelement
- 54: Lageraufnahme
- 56: Kopplungselement
- 58: Formschlusselement
- 60: Kopf
- 62: Verriegelungsmechanismus
- 64: Formschlusselement
- 66: Aufständereinheit
- 68: Aufständermodul
- 70: Aufständermodul
- 72: Querträger
- 74: Querträger
- 76: Rückenlehne
- 78: Sitzboden
- 80: vordere Sitzfußeinheit
- 82: hintere Sitzfußeinheit
- 84: Grundkörper
- 86: Tragbereich
- 88: Lageraufnahme
- 90: Lageraufnahme
- 92: Befestigungselement
- 94: Befestigungselement
- 96: Schwenklager
- 98: Aufnahmebereich
- 100: Lagerbolzen
- 102: Abstützbereich
- 104: Anlagefläche
- 106: Abstützelement
- 108: Verriegelungsmechanismus
- 110: Verriegelungspin
- 112: Aufnahmeloch
- 114: Aufnahmeloch
- 116: Linearlager
- 118: Führungsschiene
- 120: Abdeckelement
- 122: Anzeigeelement
- 124: Auslösehebel
- 126: Hüllkurve
- 128: Hüllkurve
- 130: Nutzelement
- 132: Sitz
- 134: Sitzreihe
- 136: Rammschutz
- 138: Verriegelungsbolzen
- 140: Betätigungselement
- 142: Entriegelrichtung

## Patentansprüche

1. Transportsitzsystem, insbesondere Flugzeugsitzsystem, mit zumindest einem ersten Sitz (10a; 10b; 10c), der zumindest ein Aufständermodul (28a, 30a) umfasst, das zur Aufständerung des Sitzes (10a; 10b; 10c) in einem Transportmittel dazu vorgesehen ist, auf einer Führungsschiene (22a, 24a; 22b; 22c) angebunden zu werden, und mit zumindest einem hinter dem ersten Sitz (10a; 10b; 10c) angeordneten zweiten Sitz (12a; 12b; 12c), der zumindest ein Aufständermodul (68a, 70a; 68b; 68c) umfasst, das zur Aufständerung des Sitzes (12a; 12b; 12c) in dem Transportmittel dazu vorgesehen ist, auf derselben Führungsschiene (22a, 24a; 22b; 22c) angebunden zu werden, wobei die beiden Sitze (10a, 12a; 10b, 12b; 10c, 12c) zur Ausbildung einer Gebrauchsstellung und einer Verstaustellung von zumindest einem der Sitze (12a; 12b; 12c) dazu vorgesehen sind, auf der Führungsschiene (22a, 24a; 22b; 22c) relativ zueinander verschoben zu werden, wobei zumindest ein Aufständermodul (68a, 70a; 68b; 68c) zumindest eines der Sitze (12a; 12b; 12c) eine Sitzfußeinheit (80a; 80b; 82c) aufweist, die relativ zu zumindest einem Teil des Aufständermoduls (68a, 70a; 68b; 68c) beweglich gelagert ist, wobei die Sitze (10a, 12a; 10b, 12b; 10c, 12c) jeweils eine Rückenlehne (36a; 36b; 36c) umfassen, die in der Gebrauchsstellung und in der Verstaustellung die gleiche, aufrechte Stellung aufweist, **dadurch gekennzeichnet, dass** zumindest einer der Sitze (12a; 12b) in der Verstaustellung zumindest mit seinem Aufständermodul (68a, 70a; 68b) zumindest teilweise überlappend zu dem Aufständermodul (28a, 30a) des anderen Sitzes (10a; 10b) angeordnet ist.

2. Transportsitzsystem nach Anspruch 1, **dadurch gekennzeichnet, dass** die bewegliche Sitzfußeinheit (80a; 80b) als eine vordere Sitzfußeinheit des zweiten Sitzes (12a; 12b) ausgebildet ist.

3. Transportsitzsystem nach Anspruch 1 oder 2, **dadurch gekennzeichnet, dass** die eine Sitzfußeinheit (80a; 80b; 82c) des Aufständermoduls (68a, 70a; 68b; 68c) des einen Sitzes (12a; 12b; 12c) zur Verstellung zwischen der Gebrauchsstellung und der Verstaustellung relativ zu einer zweiten Sitzfußeinheit (82a; 82b; 80c) beweglich ist.

4. Transportsitzsystem nach Anspruch 3, **dadurch gekennzeichnet, dass** das Aufständermodul (68b; 68c) ein Linearlager (116b; 116c) aufweist, über das die bewegliche Sitzfußeinheit (80b; 80c) zu der anderen Sitzfußeinheit (82b; 80c) verschiebbar ist.

5. Transportsitzsystem zumindest nach Anspruch 2, **dadurch gekennzeichnet, dass** das Aufständermodul (68a, 70a) ein Schwenklager (96a) aufweist, über das die vordere Sitzfußeinheit (80a) verschwenkbar ist.

6. Transportsitzsystem nach einem der vorhergehenden Ansprüche, **dadurch gekennzeichnet, dass** das Aufständermodul (68a, 70a) des zweiten Sitzes (12a) einen Grundkörper (84a) ausbildet, der die hintere Sitzfußeinheit (82a) und einen Tragbereich (86a) zwischen zwei Querträgern (72a,74a) des Sitzes (12a) ausbildet.

7. Transportsitzsystem nach einem der vorhergehenden Ansprüche, **dadurch gekennzeichnet, dass** der erste Sitz (10a) zumindest ein Auslöseelement (52a) aufweist, das zur Betätigung vorgesehen ist, um den ersten Sitz (10a) zwischen einer Arretierstellung und einer Verschiebestellung zu verstellen.

8. Transportsitzsystem nach Anspruch 7, **dadurch gekennzeichnet, dass** der erste Sitz (10a) zumindest zwei Aufständermodule (28a, 30a) umfasst, die von dem Auslöseelemet (52a) gemeinsam ausgelöst werden.

9. Transportsitzsystem nach Anspruch 7 oder 8, **dadurch gekennzeichnet, dass** das Auslöseelement (52a) als eine Gepäckstange ausgebildet ist.

10. Transportsitzsystem zumindest nach Anspruch 7, **dadurch gekennzeichnet, dass** der erste Sitz (10a) zumindest ein Befestigungselement (44a, 46a) aufweist, das das zumindest eine Aufständermodul (28a, 30) mit der Führungsschiene (22a,24a) koppelt, wobei das Befestigungselement (44a, 46a) zumindest ein Verriegelungselement (48a) aufweist, das mittels des Auslöseelements (52a) zwischen einer Verriegelstellung und einer Entriegelstellung verstellbar ist.

11. Transportsitzsystem nach Anspruch 10, **dadurch gekennzeichnet, dass** der erste Sitz (10a) zumindest ein zweites Befestigungselement (44a, 46a) zur Anbindung an eine zweite Führungsschiene (22a,24a) aufweist, wobei das zweite Befestigungselement (44a, 46a) gemeinsam mit dem ersten Befestigungselement (44a, 46a) von dem Auslöseelement (52a) betätigbar ist.

12. Transportsitzsystem zumindest nach Anspruch 6, **dadurch gekennzeichnet, dass** das gesamte Auslöseelement (52a) beweglich in dem zumindest einen Aufständermodul (28a, 30a) gelagert ist.

## Claims

1. Transport seat system, in particular aircraft seat system,
with at least one first seat (10a; 10b; 10c) comprising at least one mounting module (28a, 30) that is, for a mounting of the seat (10a; 10b; 10c) in a transport means, configured to be connected on a guide rail (22a, 24a; 22b; 22c),
and with at least one second seat (12a; 12b; 12c) which is arranged behind the first seat (10a; 10b; 10c) and comprises at least one mounting module (68a, 70a; 68b; 68c) that is, for a mounting of the seat (12a; 12b; 12c) in the transport means, configured to be connected on the same guide rail (22a, 24a; 22b; 22c),
wherein, for an implementation of a use position and a stowage position of at least one of the seats (12a; 12b; 12c), the two seats (10a, 12a; 10b, 12b; 10c, 12c) are configured to be displaced on the guide rail (22a, 24a; 22b; 22c) relative to one another,
wherein at least one mounting module (68a, 70a; 68b; 68c) of at least one of the seats (12a; 12b; 12c) comprises a seat foot unit (80a; 80b; 82c) that is supported movably relative at least to a portion of the mounting module (68a, 70a; 68b; 68c), the seats (10a, 12a; 10a, 12b; 10c, 12c) each comprising a backrest (36a; 36b; 36c) that has the same upright position in the use position and in the stowage position,
**characterised in that** in the stowage position at least one of the seats (12a; 12b) is arranged such that it at least partially overlaps with its mounting module (68a, 70a; 68b) the mounting module (28a, 30a) of the other seat (10a; 10b).

2. Transport seat system according to claim 1,
**characterised in that** the mobile seat foot unit (80a; 80b) is realized as a front seat foot unit of the second seat (12a; 12b).

3. Transport seat system according to claim 1 or 2,
**characterised in that** for an adjustment between the use position and the stowage position, the one seat foot unit (80a; 80b; 82c) of the mounting module (68a, 70a; 68b; 68c) of the one seat (12a; 12b; 12c) is movable relative to a second seat foot unit (82a; 82b; 80c).

4. Transport seat system according to claim 3,
**characterised in that** the mounting module (68b; 68c) comprises a linear bearing (116b; 116c), via which the movable seat foot unit (80b; 80c) is displaceable relative to the other seat foot unit (82b; 80c).

5. Transport seat system at least according to claim 2,
**characterised in that** the mounting module (68a, 70a) comprises a pivot bearing (96a), via which the front seat foot unit (80a) is pivotable.

6. Transport seat system according to one of the preceding claims,
**characterised in that** the mounting module (68a, 70a) of the second seat (12a) forms a base body (84) implementing the rear seat foot unit (82a) and a load-bearing region (86a) between two cross-beams (72a, 74a) of the seat (12a).

7. Transport seat system according to one of the preceding claims,
**characterised in that** the first seat (10a) comprises at least one trigger element (52a) that is configured to be operated for an adjustment of the first seat (10a) between a blocked position and a displaceable position.

8. Transport seat system according to claim 7,
**characterised in that** the first seat (10a) comprises at least two mounting modules (28a, 30a), which are triggered together by the trigger element (52a).

9. Transport seat system according to claim 7 or 8,
**characterised in that** the trigger element (52a) is embodied as a luggage rod.

10. Transport seat system at least according to claim 7,
**characterised in that** the first seat (10a) comprises at least one fixation element (44a, 46a) coupling the at least one mounting module (28a, 30a) with the guide rail (22a, 24a),
the fixation element (44a, 46a) comprising at least one locking element (48a) that is adjustable between a locked position and an unlocked position via the trigger element (52a).

11. Transport seat system according to claim 10,
**characterised in that** the first seat (10a) comprises at least one second fixation element (44a, 46a) for a connection to a second guide rail (22a, 24a),
the second fixation element (44a, 46a) being operable by the trigger element (52a) together with the first fixation element (44a, 46a).

12. Transport seat system at least according to claim 6,
**characterised in that** the entire trigger element (52a) is movably supported in the at least one mounting module (28a, 30a).

## Revendications

1. Système de siège de transport, en particulier système de siège d'avion,
avec au moins un premier siège (10a ; 10b ; 10c) comprenant au moins un module de support (28a, 30a) qui est prévu, pour une mise en place du siège (10a ; 10b ; 10c) dans un moyen de transport, à être raccordé sur un rail de guidage (22a, 24a ; 22b ; 22c),
et avec au moins un deuxième siège (12a ; 12b ; 12c) disposé derrière le premier siège (10a ; 10b ; 10c) et comprenant au moins un module de support (68a, 70a ; 68b ; 68c) qui est prévu, pour une mise en place du siège (12a ; 12b ; 12c) dans le moyen de transport, à être raccordé sur le même rail de guidage (22a, 24a ; 22b ; 22c),
les deux sièges (10a, 12a ; 10b, 12b ; 10c, 12c) étant prévus, pour une réalisation d'une position d'usage et une position de rangement d'au moins un des sièges (12a ; 12b ; 12c), à être déplacé sur le rail de guidage (22a, 24a ; 22b ; 22c) l'un par rapport à l'autre,
où au moins un module de support (68a, 70a ; 68b ; 68c) d'au moins un des sièges (12a ; 12b ; 12c) comporte une unité piètement de siège (80a ; 80b ; 82c) qui est supportée d'une façon mobile par rapport à au moins une partie du module de support (68a, 70a ; 68b ; 68c),
où chacun des sièges (10a, 12a ; 10b, 12b ; 10c, 12c) comporte un dossier (36a ; 36b ; 36c) ayant la même position debout dans la position d'usage et dans la position de rangement,
**caractérisé en ce que** dans la position de rangement au moins un des sièges (12a ; 12b) est disposé au moins partiellement chevauchant avec son module de support (68a, 70a ; 68b) sur le module de support (28a, 30) de l'autre siège (10a ; 10b).

2. Système de siège de transport selon la revendication 1,
**caractérisé en ce que** l'unité piètement de siège mobile (80a ; 80b) est implémentée comme une unité piètement de siège antérieure du deuxième siège (12a ; 12b).

3. Système de siège de transport selon la revendication 1 ou 2,
**caractérisé en ce que** l'une unité piètement de siège (80a ; 80b ; 82c) du module de support (68a, 70a ; 68b ; 68c) de l'un siège (12a ; 12b, 12c) est mobile par rapport à une deuxième unité piètement de siège (82a ; 82b ; 80c) pour le bût d'un ajustement entre la position d'usage et la position de rangement.

4. Système de siège de transport selon la revendication 3,
**caractérisé en ce que** le module de support (68b ; 68c) comporte un palier linéaire (116b ; 116c), par le biais duquel l'unité piètement de siège mobile (80b ; 80c) est déplaçable par rapport à l'autre unité piètement de siège (82b ; 80c).

5. Système de siège de transport au moins selon la revendication 2,
**caractérisé en ce que** le module de support (68a, 70a) comporte un palier pivotant (96a), par le biais duquel l'unité piètement de siège antérieure (80a) peut être pivotée.

6. Système de siège de transport selon l'une quelconque des revendications précédentes,
**caractérisé en ce que** le module de support (68a, 70a) du deuxième siège (12a) forme un corps de base (84a) implémentant l'unité piétement de siège arrière (82a) et une zone porteuse (86a) entre deux porteurs transversaux (72a, 74a) du siège (12a).

7. Système de siège de transport selon l'une quelconque des revendications précédentes,
**caractérisé en ce que** le premier siège (10a) comporte au moins un élément déclencheur (52a) qui est prévu à être opéré pour un ajustement du premier siège (10a) entre une position de blocage et une position de déplacement.

8. Système de siège de transport selon la revendication 7,
**caractérisé en ce que** le premier siège (10a) comporte au moins deux modules de support (28a, 30a), qui sont déclenchés ensemble par l'élément déclencheur (52a).

9. Système de siège de transport selon la revendication 7 ou 8,
**caractérisé en ce que** l'élément déclencheur (52a) est réalisé comme une tige porte-bagage.

10. Système de siège de transport au moins selon la revendication 7,
**caractérisé en ce que** le premier siège (10a) comporte au moins un élément de fixation (44a, 46a) qui couple l'au moins un module de support (28a, 30a) avec le rail de guidage (22a, 24a),
l'élément de fixation (44a, 46a) comportant au moins un élément de verrouillage (48a) qui est ajustable entre une position verrouillée et une position déverrouillée par l'élément déclencheur (52a).

11. Système de siège de transport selon la revendication 10,
**caractérisé en ce que** le premier siège (10a) comporte au moins un deuxième élément de fixation (44a, 46a) pour un raccordement à un deuxième rail de guidage (22a, 24a),
le deuxième élément de fixation (44a, 46a) étant opérable ensemble avec le premier élément de fixation (44a, 46a) par l'élément déclencheur (52a).

12. Système de siège de transport au moins selon la revendication 6,
**caractérisé en ce que** l'élément déclencheur entier (52a) est supporté d'une manière mobile dans l'au moins un module de support (28a, 30a).
